# FASCICULE DE BREVET EUROPEEN

(11) **EP 3 114 163 B1**
(45) Date de publication et mention de la délivrance du brevet: **05.12.2018**
(21) Numéro de dépôt: 15714569.9
(22) Date de dépôt: 04.03.2015
(51) Int. Cl.: C08K 5/09, C11C 1/10, C08L 27/06, C08L 67/00, C08L 77/00

(54) **COMPOSITION MODIFIANT LES PROPRIETES MECANIQUES D'UN POLYMERE THERMOPLASTIQUE**
ZUSAMMENSETZUNG ZUR MODIFIZIERUNG DER MECHANISCHEN EIGENSCHAFTEN EINES THERMOPLASTISCHEN POLYMERS
COMPOSITION MODIFYING THE MECHANICAL PROPERTIES OF A THERMOPLASTIC POLYMER

(30) Priorité: 04.03.2014 FR 1451772
(43) Date de publication de la demande: 11.01.2017
(73) Titulaire: Institut National de la Recherche Agronomique (INRA), 75007 Paris (FR); CNAM-CONSERVATOIRE NATIONAL DES ARTS ET METIERS, 75003 Paris (FR); Institut des Sciences et Industries du Vivant et de l'Environnement, 75005 Paris (FR); Institut des Corps Gras, 33600 Pessac (FR)
(72) Inventeur: DUCRUET, Violette, F-78470 Saint Remy les Chevreuse (FR); RUELLAN, Alexandre, 78600 Maisons-Laffitte (FR); DOMENEK, Sandra, 91430 Igny (FR); GUINAULT, Alain, F-77124 Cregy les Meaux (FR); SOLLOGOUB, Cyrille, F-92140 Clamart (FR); ALFOS, Carine, F-33600 Pessac (FR); CHOLLET, Guillaume, F-33850 Leognan (FR); DELAMOUR, Anne-Chrystelle, F-10410 Saint Parres aux Tertres (FR)
(74) Mandataire: Jacobacci Coralis Harle
(86) Numéro de dépôt international: PCT/FR2015/050533
(87) Numéro de publication internationale: WO 2015/132530

(56) Documents cités:
- FR-A1- 2 923 488
- US-A- 3 479 309
- US-A- 5 763 518
- US-A1- 2012 083 558
- US-B2- 7 186 763

## Description

### DOMAINE DE L'INVENTION

L'invention se rapporte au domaine des additifs des matériaux thermoplastiques. En particulier l'utilisation se rapporte à l'utilisation d'acides gras libres, notamment sous forme d'un condensat de désodorisation d'huile végétale, pour améliorer les propriétés mécaniques de matériaux thermoplastiques. L'invention se rapporte également à un procédé d'obtention de matériaux plastiques aux propriétés mécaniques améliorées ainsi qu'à des matériaux thermoplastiques et produits dérivés possédant lesdites propriétés.

### CONTEXTE DE L'INVENTION

Il existe aujourd'hui une préoccupation croissante en matière d'environnement. Cette tendance se traduit par un développement industriel considérable des matériaux plastiques biodégradables. Parallèlement, avec l'épuisement progressif des ressources fossiles, le développement de matériaux biosourcés substitutifs est également une préoccupation majeure.

Ces matériaux, à base de polymères biodégradables et/ou biosourcés ou de mélanges de polymères biodégradables et/ou biosourcés doivent néanmoins posséder des performances égales ou supérieures aux matériaux synthétiques communément utilisés afin d'être concurrentiels. Ainsi, afin d'être exploitables à grande échelle, le matériau formulé final doit avoir des propriétés physiques qui répondent aux exigences d'une production industrielle et d'une utilisation par les consommateurs.

La solution la plus couramment utilisée pour améliorer les performances mécaniques des matériaux plastiques, et notamment l'élongation à la rupture, appelée également ductilité, consiste en l'adjonction à la résine de polymères, d'additifs, également appelés plastifiants, par exemple les phtalates, les citrates, les adipates, les stéarates, les benzoates, les époxydes, etc., qui permettent de générer un produit flexible, résistant et plus facile à manipuler.

Toutefois les plastifiants actuellement employés dans l'industrie des polymères sont généralement d'origine pétrochimique, de sorte que cette additivation ne permet pas de conserver la biodégradabilité du produit, et/ou diminue la teneur en carbone biosourcé du matériau final, et ce d'autant plus, qu'un plastifiant est usuellement ajouté en quantité élevée (entre 10 et 30 % en poids par rapport au poids total du matériau).

En outre, l'adjonction d'un plastifiant dans un matériau polymère tend à diminuer sa température de transition vitreuse ainsi que diverses grandeurs mécaniques, comme le module d'Young ou la contrainte à l'écoulement et/ou la contrainte à la rupture, des caractéristiques physiques du matériau qui s'avèrent limitantes dans certaines applications.

Par ailleurs, de nombreux plastifiants sont toxiques pour l'homme ou l'animal, de sorte que leur utilisation, notamment dans des matériaux destinés au contact alimentaire, est soumise à une réglementation stricte au niveau européen. En particulier, les risques liés à l'utilisation d'une substance chimique entrant dans la composition d'un emballage d'un point de vue de l'exposition du consommateur (migration, exposition, etc...) et de sa toxicité doivent être évalués de manière très stricte. Les substances autorisées sont ensuite classées dans une liste (la Liste Positive, règlement CE 1935/2004).

Des dérivés époxydés d'acides gras, comme notamment l'huile de soja époxydée, les époxy stéarates et l'époxy-tallate d'octyle peuvent être utilisés comme plastifiant du PVC (poly(chlorure de vinyle)), ou du PLA (visant l'acide polylactique et le polylactide dans la suite du texte). Néanmoins, les quantités à mettre en oeuvre sont importantes et leur prix très élevé limite fortement leur utilisation. Par ailleurs, leur efficacité en tant que plastifiants, en particulier pour augmenter la ductilité des polymères, n'est pas établie. En particulier, pour le PLA les gains en terme d'élongation (ou d'allongement) à la rupture sont nuls ou faibles (**réf.**¹⁻⁶), malgré des proportions d'additifs proche de 15 % en poids. En outre, de tels dérivés époxydés d'acides gras sont connus pour se décomposer en présence d'eau et se séparer du PVC

Il serait donc souhaitable de disposer d'additifs biosourcés et biodégradables, non toxiques, notamment aptes au contact alimentaire, ayant des propriétés plastifiantes et permettant de modifier et, en fonction des applications et des polymères envisagés, d'améliorer les caractéristiques mécaniques d'un matériau polymère thermoplastiques et notamment sa résistance à la rupture en terme de contrainte ou d'élongation. Il serait ainsi souhaitable de disposer d'additifs permettant d'améliorer l'allongement à la rupture (i.e. : de l'augmenter) et /ou de modifier l'un ou plusieurs des autres paramètres déterminés dans un test de traction, comme l'allongement à l'écoulement, le module d'Young ainsi que les contraintes à l'écoulement et à la rupture.

Dans certains modes de réalisation, il est souhaitable d'augmenter la ductilité d'un matériau polymère, de préférence en ne modifiant pas, ou peu, son module d'Young. De telles propriétés sont typiquement recherchées pour certains polymères dont la ductilité est faible, comme le PLA, afin d'améliorer leur tenue au choc. En effet, ces modifications permettent d'améliorer la processabilité de ces polymères dans le cadre de procédés de mise en oeuvre de type extrusion gonflage ou extrusion soufflage de gaine

Dans d'autres modes de réalisation, il est préférable de diminuer le module d'Young afin d'obtenir un matériau moins rigide et plus souple et/ou d'augmenter l'allongement à l'écoulement, afin de faire varier l'élasticité du matériau.

Pour certains polymères, comme le PLA, dont la température de transition vitreuse est proche de 55 °C, il serait également souhaitable dedisposer d'additifs, qui ne modifient pas ou peu la température de transition vitreuse.

Dans certains modes de réalisation, en particulier pour le PLA, il est également souhaitable que les propriétés mécaniques intrinsèques du matériau polymère dans lequel les additifs sont intégrés, telles que le module d'Young ou la contrainte à l'écoulement ne soient pas modifiées.

Dans le cas de plastiques destinés à être transformés en emballage alimentaire, il convient que le matériau plastifié possède une température de transition vitreuse suffisamment élevée et éloignée des températures ambiantes moyennes pour éviter tous phénomènes de « thermo-collage» des granulés lors du stockage, ou du film sur lui-même lorsqu'il est enroulé en bobine, forme commerciale du matériau avant son utilisation par l'industrie de l'emballage. D'autre part, ses propriétés mécaniques intrinsèques doivent correspondre à une utilisation normale par des consommateurs. Ainsi, le film doit pouvoir supporter des contraintes mécaniques suffisantes sans rompre (élongation à la rupture élevée) et ne doit pas subir aisément de déformations irréversibles (contrainte et déformation à l'écoulement élevées) qui pourraient nuire à l'emballage, tant sur l'aspect de la conservation de l'aliment que sur celui de l'esthétique du packaging.

Parmi les différentes matrices biosourcées et biodégradables, les polyesters montrent un bon potentiel pour la fabrication de matériaux d'emballage. On retient notamment le polylactide et/ou l'acide polylactique (dont la dénomination commune utilisée dans la suite de la présente demande est PLA), qui sont déjà disponibles sur le marché en quantités importantes. Néanmoins, bien que le PLA possède beaucoup des exigences nécessaires aux thermoplastiques pour des applications d'emballages, ce polymère possède une faible élongation à la rupture ce qui limite son utilisation.
Il serait donc particulièrement avantageux de disposer d'additifs permettant l'obtention d'un film souple de PLA formulé, dont l'élongation à la rupture serait fortement améliorée, tout en conservant une température de transition vitreuse suffisamment supérieure aux températures ambiantes moyennes ainsi que des propriétés mécaniques (modules et contraintes) permettant une manipulation par les consommateurs sans risque de détérioration prématurée de l'emballage alimentaire.

### RESUME DE L'INVENTION

La présente invention fournit une solution technique aux problèmes identifiés ci- dessus. En effet, la demanderesse a découvert que l'additivation d'un matériau polymère thermoplastique avec un mélange d'acides gras libres comprenant au moins un acide gras libre saturé et au moins un acide gras libre insaturé, en particulier sous forme d'un condensat de désodorisation d'huile végétale, permet de modifier les propriétés mécaniques d'un matériau polymère thermoplastique.

Selon le polymère thermoplastique utilisé, ou l'application visée, de telles modifications peuvent correspondre à une modification de l'une au moins des propriétés mécaniques suivantes :
- une augmentation de la ductilité (de préférence en ne modifiant pas ou peu les caractéristiques intrinsèques du polymère comme son module d'Young),
- une diminution du module d'Young (éventuellement associée à une diminution de la contrainte à l'écoulement et/ou de la contrainte à la rupture) ou
- une augmentation de l'élasticité (augmentation de l'allongement à l'écoulement de préférence sans modification significative des contraintes à l'écoulement et à la rupture).

De préférence, la température de transition vitreuse n'est pas ou peu modifiée.

Dans certains modes de réalisation, notamment pour le PLA, le PHBV ou leurs mélanges, l'utilisation selon l'invention permet d'augmenter l'élongation à la rupture dudit matériau. Parallèlement la température de transition vitreuse est peu diminuée. Un tel additif permet de préférence de maintenir des valeurs de module d'Young et de contrainte à l'écoulement dans des gammes compatibles avec des utilisations du matériau en tant qu'emballage.

En outre, la présence d'acides gras libres en tant qu'additif dans le matériau polymère est compatible avec une utilisation dudit matériau en contact avec l'alimentation. Les résultats de la présente invention démontrent en effet, que les mélanges d'acides gras libres issus du procédé de désodorisation, utilisés comme additifs, présentent un taux de migration inférieur au seuil réglementaire, prédisant ainsi une bonne stabilité dans le temps de ces matériaux.

L'utilisation de tels additifs permet de préserver la biodégradabilité de matériaux polymères thermoplastiques biodégradables. Elle permet également de maintenir, ou d'augmenter, la part de composés biosourcés dans des matériaux polymères thermoplastiques.

La présente invention se rapporte ainsi à l'utilisation d'une composition comprenant au moins un acide gras libre saturé et au moins un acide gras libre insaturé en tant qu'additif, pour modifier les propriétés mécaniques d'un matériau polymère thermoplastique (notamment pour augmenter l'élongation à la rupture (A_{R}) d'un matériau polymère thermoplastique), lequel matériau polymère thermoplastique est choisi parmi un polyamide ou un polyester, lesquels acides gras sont des acides gras naturels présentant une chaine carbonée ayant de 4 à 36 atomes de carbone.

L'invention fournit plusieurs modes de réalisation qui peuvent être pris seuls ou en combinaison les uns avec les autres.

Dans un mode de réalisation préféré, la composition comprenant au moins un acide gras libre saturé et au moins un acide gras libre insaturé est comprise dans au moins un condensat de désodorisation d'huile végétale. De préférence, ladite composition est un condensat de désodorisation d'huile végétale.

L'invention se rapporte encore à un matériau polymère thermoplastique additivé comprenant au moins un polymère thermoplastique choisi parmi les polyamides, les polyesters de la famille du polyéthylène téréphtalate (PET), comme le polyéthylène téréphtalate glycosylé (PETG) ou un polyester biodégradable, caractérisé en ce qu'il est additivé par au moins un condensat de désodorisation d'huile végétale.

Dans certains modes de réalisation, le matériau polymère thermoplastique comprend au moins un polyester biodégradable et notamment le PLA et/ou le PHBV.

Dans certains modes de réalisation, le matériau thermoplastique additivé, et typiquement le PLA, est caractérisé en ce que la proportion massique du condensat de désodorisation d'huile végétale va de 1 à 30 %, notamment de 1 à 20 % ou de 5 à 30 % en poids par rapport au poids total dudit matériau polymère thermoplastique additivé; ledit matériau présentant les propriétés mécaniques (mesurées en traction uniaxiale selon la norme ISO 527-2) suivantes : allongement à la rupture allant de 30 à 300 %, module d'Young supérieur à 1200 MPa, contrainte à l'écoulement supérieure à 15 MPa, ledit matériau présentant également une température de transition vitreuse, mesurée par TMDSC (temperature modulated differential scanning calorimetry) allant de 40 à 90 °C, notamment de 45 à 55°C à la pression atmosphérique.

Dans certains modes de réalisation le matériau thermoplastique additivé selon l'invention est sous forme de granulés ou sous forme d'emballage alimentaire.

L'invention se rapporte également à un procédé d'obtention d'un matériau polymère thermoplastique additivé, tel que décrit précédemment, comprenant une étape d'additivation d'au moins un matériau polymère thermoplastique avec au moins un condensat de désodorisation d'huile végétale.

L'utilisation d'un condensat de désodorisation selon l'invention et/ou la mise en oeuvre des procédés de l'invention est particulièrement avantageuse car elle permet de tirer profit de coproduits de raffinage d'huile végétale et notamment de désodorisation d'huile végétale, généralement éliminés. L'invention décrit donc un additif économique biosourcé et biodégradable, permettant de modifier les propriétés mécaniques d'un matériau polymère.

L'invention permet d'obtenir un matériau plastique à base de polymères thermoplastiques dont les propriétés mécaniques comme la ductilité, la rigidité (module d'Young), l'élasticité et la contrainte à l'écoulement, ainsi que l'allongement à l'écoulement, et les propriétés thermiques (température de transition vitreuse) sont modifiées. Dans certains modes de réalisation, typiquement lors de l'additivation d'un matériau à base de PLA, ces propriétés sont identiques ou supérieures à celles de matériaux obtenus avec des additifs connus et notamment d'origine pétrosourcée.

En outre, l'utilisation de condensats de désodorisation d'huile végétale permet, de par leurs propriétés plastifiantes mais également lubrifiantes, de diminuer les températures de mise en oeuvre des films, permettant non seulement une économie d'énergie non négligeable, mais également la mise en oeuvre de procédé d'extrusion gonflage et/ou d'extrusion soufflage, en particulier avec le PLA mélangé ou non à d'autres polymères (comme le PHBV). En effet, l'additivation avec un condensat selon l'invention augmente l'étirabilité à l'état fondu du polymère (melt strengh) et facilite les procédés d'extrusion gonflage ou soufflage.

Dans d'autre modes de réalisation, l'utilisation d'un condensat de l'invention permet de diminuer la rigidité et d'augmenter la souplesse (typiquement en diminuant le module d'Young) et/ou d'augmenter la capacité de déformation (élasticité) de certains matériaux polymériques en modifiant (notamment en augmentant) l'allongement à l'écoulement ou modifiant (notamment en diminuant) la contrainte à l'écoulement. Ainsi de façon générale, l'invention permet d'améliorer la processabilité de matériaux polymériques.

De préférence, les additifs de l'invention ne modifient pas ou peu la température de transition vitreuse du matériau polymère additivé.

L'invention se rapporte enfin aux produits réalisés à partir du matériau polymère thermoplastique selon l'invention, par exemple un emballage alimentaire.

### DESCRIPTION DETAILLEE DE L'INVENTION

La présente invention se rapporte à l'utilisation d'une composition comprenant au moins un acide gras libre saturé et au moins un acide gras libre insaturé, en tant qu'additif, pour modifier les propriétés mécaniques d'un matériau polymère thermoplastique, et par exemple, pour augmenter l'élongation à la rupture.

Par matériau polymère thermoplastique, on entend un matériau comprenant au moins un polymère thermoplastique et optionnellement un ou plusieurs composés additionnels. Des composés additionnels sont par exemple des colorants, des charges, des fibres, des agents antistatiques, des fongicides, des bactéricides, des agents stabilisants, etc.

De préférence, un matériau polymère thermoplastique comprend une proportion de polymère thermoplastique d'au moins 50 %, 60 %, 70 % ; 80 %, 85 %, 90 %, 95 % ou 99 % en poids par rapport au poids total du matériau.

Par matériau polymère thermoplastique additivé, on entend un matériau comprenant au moins un polymère thermoplastique et au moins un additif selon l'invention, c'est-à-dire consistant en un mélange d'acide gras libres comprenant au moins un acide gras libre saturé et au moins un acide gras libre insaturé. De préférence, le mélange d'acides gras libres comprenant au moins un acide gras libre saturé et au moins un acide gras libre insaturé est sous forme de condensat de désodorisation d'huile végétale.

Les matériaux polymères thermoplastiques utilisables selon l'invention comprennent au moins un polymère thermoplastique choisi parmi les polyamides (aliphatiques, semi-aromatiques ou aromatiques) ou les polyesters (aliphatiques, semi aromatiques ou aromatiques).

Parmi les polyesters et co-polyesters thermoplastiques, on peut mentionner notamment l'acide polyglycolique, le polylactide (PLA), l'acide polylactique (PLA) ou l'un de ses copolymères, la polycaprolactone (PCL), les polyhydroxyalcanoates (PHAs), comme le PHBV (Poly(3-hydroxybutyrate-co-3-hydroxyvalerate) et le PHB (poly-3-hydroxybutyrate) le polyéthylène adipate (PEA), le polyéthylène succinate (PES), le polybutylène succinate (PBS), le polybytylène adipate (PBA), le polybutylène succinate co-adipate (PBSA), le polybutylène adipate co-téréphtalate (PBAT), les polyéthylènes téréphtalate (PET), en particulier la polyéthylène téréphtalate glycosylé (PETG), le polybutylène téréphtalate (PBT), le polytriméthylène téréphtalate (PTT).

Parmi les polyamides, on préfère notamment les polyamides aliphatiques et notamment le PA11 (polyundécanamide), un polymère biosourcé qui peut être fabriqué à partir de l'acide 11-aminoundécanoïque (acide aminé issu de l'huile de ricin).

Dans un mode de réalisation, on préfère les polymères thermoplastiques biodégradables et en particulier les polyesters et copolyesters biodégradables, notamment, l'acide polyglycolique, le polylactide (PLA), l'acide polylactique (PLA) et ses copolymères, le polycaprolactone (PCL), les polyhydroxyalcanoates (PHA), le polyéthylène adipate (PEA), le polyéthylène succinate (PES), le polybutylène succinate (PBS), le polybutylène adipate (PBA), le polybutylène succinate co-adipate (PBSA).

Parmi les PHAs, on peut citer à titre d'exemple le PHBV ou le PHB qui sont biodégradables.

Dans certains modes de réalisation on utilise un mélange d'au moins deux polymères thermoplastiques. On utilise de préférence des polymères thermoplastiques biodégradables. Par exemple, il est possible d'utiliser un mélange de PLA et de PHAs, et de préférence un mélange de PLA et de PHBV.

Généralement le PLA représente de 10 à 95 % et de préférence de 50 à 95 % ou de 60 à 90 %, ou encore de 85 à 95 % en poids, par rapport au poids total du mélange de polymères thermoplastiques.

Dans un mode de réalisation particulier le mélange de polymères thermoplastiques contient du PLA et de 5 à 5 %, et de préférence 10 %, en poids d'un second polymère thermoplastique, comme le PHBV.

Par biosourcé, on entend un composé, ou un matériau, issu de la biomasse animale ou végétale. Par définition, les condensats de désodorisation d'huile végétale selon l'invention sont issus de la biomasse végétale.

Par biodégradable on entend que le polymère et notamment le matériau polymère peut être converti en dioxyde de carbone ou en méthane, en eau et en biomasse sous l'effet des micro-organismes qui l'utilisent comme nutriment. De préférence, 90% de biodégradation doit être atteinte en moins de 6 mois. En outre, la totalité des résidus supérieurs à 2 mm doit être inférieure à 10% de la masse initiale après 3 mois de fragmentation sous l'effet d'un compost. De façon particulièrement préférée, un polymère ou un matériau polymère selon l'invention répond à la norme EN 13432.

Les matériaux polymères thermoplastiques de l'invention et en particulier les polymères thermoplastiques de l'invention sont typiquement biosourcés, c'est à dire issus de la biomasse animale ou végétale.

Dans un mode de réalisation particulièrement préféré de l'invention, on utilise l'acide polylactique, le polylactide et/ou l'un de leurs copolymères. En raison de la nature chirale de l'acide lactique, plusieurs formes de PLA existent : le poly-L-lactide (PLLA) est le produit résultant de la polymérisation du L-lactide et le poly-D-lactide (PDLA), produit de la polymérisation du D-lactide. Des polymères et/ou des copolymères issus de la polymérisation du L-lactide et du D-lactide ou encore du D,L-lactide peuvent également être utilisés. De façon générale, le PLA utilisé selon l'invention est issu de la polymérisation du L-lactide avec un pourcentage minoritaire de D-lactide ou mésolactide.

Les acides gras selon l'invention sont des acides gras naturels présentant une chaine carbonée ayant de 4 à 36 atomes de carbone. Le terme acide gras libre signifie que l'acide gras n'est pas lié d'une façon covalente à une autre molécule. En particulier, l'acide gras n'est pas estérifié. Par ailleurs, les acides gras libres de l'invention ne sont de préférence pas époxydés.

De préférence, les acides gras libres de l'invention sont des acides gras libres issus d'huiles végétales qui comprennent de préférence de 8 à 24 atomes de carbones.

S'agissant des acides gras saturés, on peut mentionner à titre d'exemples, l'acide caprylique (N°CAS 124-07-2), l'acide caprique (N°CAS 334-48-5), l'acide laurique (N°CAS 143-07-7), l'acide myristique (N°CAS 544-63-8), l'acide palmitique (N°CAS 57-10-3), l'acide stéarique (N°CAS 57-11-4), l'acide arachidique (N°CAS 506-30-9), l'acide béhénique (N°CAS 112-85-6) et l'acide lignocérique (N°CAS 557-59-5). Les acides gras insaturés selon l'invention peuvent être des acides gras mono- ou polyinsaturés. Typiquement les acides gras insaturés selon l'invention ont entre 16 et 24 atomes de carbone et peuvent être sous forme cis ou trans. A titre d'exemples, on peut citer l'acide palmitoléique (N°CAS 373-49-9), l'acide oléique (N°CAS 112-80-1), l'acide érucique (N°CAS 112-86-7), l'acide nervonique (N°CAS 506-37-6), l'acide eicosénoïque (N°CAS 5561-99-9), l'acide linoléique (N°CAS 60-33-3), l'acide α-linolénique (N°CAS 463-40-1), l'acide γ-linolénique (N°CAS 506-26-3), l'acide dihomo- γ-linolénique (N°CAS 1783-84-2), l'acide arachidonique (N°CAS 50632-1), l'acide eicosapentaénoique (N°CAS 10417-94-4), l'acide docosahexaénoïque (N°CAS 6217-54-5), l'acide élaïdique (N°CAS 112-79-8), l'acide de Mead (N°CAS 20590-32-3), l'acide myristoléique (N°CAS 544-64-9), l'acide sapiénique (N°CAS 14134-46-4), l'acide pétiosélinique (N°CAS 593-39-5), l'acide trans-vaccénique (N°CAS 693-72-1), l'acide linolélaïdique (N°CAS 506-21-8), l'acide ruménique (N°CAS 1839-11-8), l'acide punicique (N°CAS 544-729), l'acide α-éléostéarique (N°CAS 208-877-3), l'acide β-éléostéarique (N°CAS 544-73-0), l'acide captilique(N°CAS 4337-71-7), l'acide jacarique (N°CAS 28872-28-8), l'acide calendique (N°CAS 5204-87-5), l'acide pinolénique (N°CAS 16833-54-8), l'acide α-parinarique (N°CAS 18427-44-6), l'acide paullinique. (N°CAS 17735-94-3). L'acide palmitique, l'acide oléique, l'acide 1 cis oléique et l'acide 2 cis linoléique sont particulièrement préférés selon l'invention.

Par au moins un acide gras libre saturé et au moins un acide gras libre insaturé on entend au moins un type d'acide gras libre saturé et au moins un type d'acide gras libre insaturé. Typiquement le mélange d'acides gras libres selon l'invention, comprenant au moins un acide gras libre saturé et au moins un acide gras libre insaturé, contient de 10 à 90 % en poids d'acides gras saturés, par rapport au poids total des acides gras libres, et de 90 à 10 % en poids d'acides gras insaturés, par rapport au poids total des acides gras libres.

Dans certains modes de réalisation, on choisira de préférence un mélange d'acides gras libres contenant au moins 40 % en poids d'acide gras libres saturés, par rapport au poids total des acides gras libres, et notamment de 40 à 60 % ou de 40 à 55 % en poids d'acide gras libre saturés par rapport au poids total des acides gras libres. Un tel exemple d'un mélange d'acides gras libres est illustré par les condensats de désodorisation d'huile de palme qui comprennent une proportion d'acides gras libres allant de 40 à 55 % et notamment de 40 à 50 % en poids par rapport au poids total des acides gras libres saturés (la fraction restante étant représentée par les acides gras libres insaturés).

Dans certains modes de réalisation on choisit un mélange d'acides gras libres dont l'indice d'iode est inférieur à une valeur de 150, de 120, de 100, de 80, de 70 ou de 60 g pour 100 g de mélange d'acides gras libres. De préférence, l'indice d'iode varie de 30 à 150 g , notamment de 40 à 100 g pour 100 g dudit mélange ; et dans certains modes de réalisation de 40 à 80 g et de préférence de 40 à 60 g pour 100g dudit mélange.

L'indice d'iode d'un condensat de désodorisation selon l'invention correspond à la masse de diiode (I₂) (exprimée en g) capable de se fixer sur les insaturations, ou doubles liaison, présentes dans 100 g de condensat, et en particulier sur les acides gras libres insaturés. L'indice d'iode peut être déterminé par la méthode de Wijs (norme ISO EN 3961).

A titre d'exemple, un condensat de désodorisation d'huile de palme selon l'invention possède un indice d'iode allant de 52 à 57 g/100 g de condensat de désodorisation. Un condensat de désodorisation d'huile d'olive possède un indice d'iode allant de 48 à 52 g/100g de condensat ; un condensat de désodorisation d'huile de colza possède un indice d'iode allant de 110 à 120 g et de préférence de 114 à 118 g/100g de condensat. Enfin, un condensat de désodorisation d'huile de tournesol possède un indice d'iode allant de 130 à 140 g, de préférence de 134 à 138 g/100g de condensat.

Selon l'invention, le matériau polymère thermoplastique peut être additivé (de façon à obtenir un matériau polymère thermoplastique additivé) avec une proportion massique d'une composition d'acides gras libres selon l'invention allant de 1 à 30 %, notamment de 1 à 20 % et plus particulièrement de 1 à 15 % en poids, par rapport au poids total du polymère thermoplastique additivé avec ledit mélange d'acides gras libres.

Dans certains modes de réalisation, la composition d'acides gras libres selon l'invention comprend une proportion massique d'acides gras libres allant de 15 à 100 %, notamment de 25 à 100 % en poids par rapport au poids total de la composition. Dans certains modes de réalisation, cette proportion massique est supérieure ou égale à l'une quelconque des valeurs suivantes : 20 ; 25 ; 30 35 ; 40 ; 45 ; 50 ; 55 ; 60 ; 65 ; 70 ; 75 ; 80 ; 85 ; 90 ou 95 %. Un matériau polymère thermoplastique peut donc être additivé avec une proportion massique d'une telle composition dans des proportions massiques, par rapport au poids total du polymère thermoplastique additivé allant de 1 à 20 %, notamment de 1,25 à 20 %, de 5 à 20 %, de 5 à 15 %, en particulier, dans des proportions de 5 ; 10 ; 15 ou 20 % en poids.

Une telle composition peut également comprendre un ou plusieurs composants choisi(s) parmi des acides gras estérifiés, comme des mono-, di- ou triglycérides, des aldéhydes, des cétones, des hydrocarbures (aliphatiques ou d'origine terpéniques tels que le squalène mais aussi des résidus d'hydrocarbures polycycliques aromatiques), des stérols, des tocophérols, des tocotriénols et des phytostérols.

La teneur totale en acides gras (c'est-à-dire les acides gras libres et les acides gras estérifiés notamment sous forme de mono-, di- ou triglycérides) d'une composition d'acides gras libres selon l'invention varie de 50 à 100 % en poids par rapport au poids total de la composition, de préférence, de 65 à 100 %, de 70 à 100 %, de 75 à 100%, de 80 à 100 %, de 85 à 100 % de 90 à 100 % ou encore de 95 à 100 %. De préférence également une telle composition d'acides gras libres comprend moins de 75 % d'acides gras estérifiés (typiquement sous forme de glycérides), et de préférence moins de 70, moins de 65, moins de 60, moins de 50, moins de 40 , moins de 30, moins de 20 ou encore moins de 10 % en poids d'acides gras estérifiés, par rapport au poids total de la composition. Dans certains modes de réalisation, une telle composition comprend mois de 35 % de triglycérides, notamment moins de 20 %, moins de 15 %, moins de 10 %, moins de 5 % ou encore moins de 2 % en poids de triglycérides, par rapport au poids total de la composition.

Dans certains modes de réalisation, la composition d'acides gras libres selon l'invention peut comprendre de l'huile végétale partiellement ou totalement hydrogénée. De préférence une telle composition comprend moins de 40 %, ou encore, moins de 20, moins de 15, moins de 10 ou encore moins de 5 % en poids d'huile végétale partiellement ou totalement hydrogénée, par rapport au poids total de la composition d'acides gras libres.

Dans un mode de réalisation particulièrement préféré de l'invention, la composition d'acides gras libres, telle que précédemment décrite, est sous forme d'un condensat de désodorisation d'huile végétale. Plus particulièrement, la composition d'acides gras libres, telle que précédemment décrite, est un condensat de désodorisation d'huile végétale.

Par huile végétale on entend selon l'invention, une huile obtenue par extraction à partir d'un produit végétal. On peut utiliser selon l'invention par exemple, des condensats de désodorisation obtenus à partir de l'huile de soja, l'huile d'olive, l'huile de palme, l'huile de colza, l'huile d'arachide, l'huile d'amande, l'huile de tournesol, l'huile de tournesol oléique, l'huile de palmiste, l'huile de pépins de raisin, l'huile de pépin de courge, l'huile de maïs, l'huile de noix, l'huile de germe de blé, l'huile de bourrache, l'huile de noisette, l'huile de cameline, l'huile de chanvre, l'huile de macadamia, l'huile d'onagre. Dans certains modes de réalisations on peut utiliser des condensats de désodorisation de deux, ou plus, huiles végétales différentes.

De façon préférée, on utilise selon l'invention des condensats de désodorisation (ou distillat de désodorisation) obtenus par raffinage d'au moins une huile choisie parmi le groupe constitué par l'huile de soja, l'huile d'olive, l'huile de palme, l'huile de colza, l'huile d'arachide, l'huile de palmiste, l'huile de tournesol, l'huile de pépins de raisin, l'huile de tournesol oléique ou l'huile de maïs et notamment de l'huile de soja, l'huile d'olive, l'huile de palme et l'huile de colza. Dans un mode de réalisation particulier on utilise un condensat de désodorisation, comme obtenu lors du raffinage de l'huile de palme.

La désodorisation d'une huile, typiquement lors du raffinage physique d'une huile, procède par distillation des acides gras à haute température et sous vide poussé, avec injection de vapeur (permettant de réaliser l'entrainement à la vapeur des composés distillés) dans des équipements de type désodoriseur, équipés d'un condenseur pour récupérer les acides gras qui distillent. Le mélange des composés éliminés de l'huile par entrainement à la vapeur est appelé condensat de désodorisation. Une telle distillation avec injection de vapeur sèche permet d'éliminer par entrainement à la vapeur, outre les acides gras, plusieurs autres composés comme par exemple les substances odoriférantes (typiquement les aldéhydes ou les cétones). L'huile obtenue après raffinage et notamment après l'étape de désodorisation, est une huile sans odeur ni goût désagréable, de couleur claire, faiblement acide et non péroxydée.

Les différentes étapes d'un raffinage chimique sont typiquement:
- le dégommage à l'eau ou conditionnement acide. Les sous-produits obtenus sont des gommes contenant les phospholipides
- la neutralisation chimique à la soude (obtention de pâtes de neutralisation)
- les lavages et séchage (obtention d'eaux de lavage)
- l'étape de décoloration (obtention de terres décolorantes)
- l'étape de désodorisation (obtention des condensats de désodorisation)

Dans le cas d'un raffinage physique, les étapes se limitent généralement à :
- l'étape de dégommage à l'eau ou conditionnement acide.
- l'étape de décoloration (obtention de terres décolorantes)
- l'étape de désodorisation encore appelée désacidification ou distillation (obtention des condensats de désodorisation).

Des procédés de raffinage chimique et physique et notamment les étapes de désodorisation permettant l'obtention d'un condensat utilisable dans le cadre de la présente invention sont notamment décrit dans le « Manuel des Corps Gras », par A. Karleskind (Édition Tec et Doc Lavoisier, 1992).

Généralement un condensat (ou distillat) de désodorisation selon l'invention est obtenu au cours d'une étape de désodorisation du raffinage d'une huile végétale (appelé également désacidification en raffinage physique).

La désodorisation, réalisée par entrainement à la vapeur, peut être mise en oeuvre dans les conditions suivantes: une gamme de température allant de 180 à 230 °C dans le cadre d'un raffinage chimique ou de 240 à 260 °C lors d'un raffinage physique ; sous une pression absolue inférieure à 5 mbar, et généralement allant de 3 à 4 mbar pour le raffinage chimique et de 2 à 3 pour le raffinage physique (par pression absolue on entend la pression mesurée par rapport au vide représentant le zéro absolu de pression) ; l'huile végétale étant agitée avec une quantité de vapeur injectée allant de préférence de 6 à 10 kg/h, notamment de 7,5 à 8,5 kg/h. Le débit de vapeur permet une agitation optimale de l'huile. Suivant le type d'appareil, la quantité de vapeur injectée peut varier de 15 à 100 kg/tonne d'huile à désodoriser. La durée de l'étape de désodorisation est fonction de l'huile raffinée ; Le temps de séjour à la température de désodorisation varie typiquement de 2 à 4 heures.

Comme indiqué précédemment, un condensat de désodorisation d'une huile végétale obtenu par entrainement à la vapeur, lors du raffinage physique ou chimique (notamment lors d'un procédé de raffinage tel que décrit ci-dessus) d'une huile utilisable selon l'invention, contient une proportion massique d'acides gras libres allant de 15 à 100 %, de préférence de 25 à 100 % en poids par rapport au poids total du condensat. Typiquement il contient, outre les acides gras, un mélange de composés qui sont également éliminés de l'huile avec les acides gras libres, lors de la désodorisation de l'huile. En particulier, un tel condensat peut contenir, dans des proportions variables, un ou plusieurs composés choisi(s) parmi des acides gras estérifiés, des aldéhydes, des cétones, des hydrocarbures (aliphatiques ou d'origine terpéniques tels que le squalène mais aussi des résidus d'hydrocarbures polycycliques aromatiques), des stérols, des tocophérols, des tocotriénols et des phytostérols.

La demanderesse a découvert dans la présente invention, que le mélange complexe des différents composés formant le condensat de désodorisation d'une huile végétale présentait un effet synergique sur l'amélioration des propriétés mécaniques du matériau polymère thermoplastique et en particulier sur l'augmentation de l'élongation à la rupture dudit matériau polymère thermoplastique, par rapport à une composition ne contenant qu'un mélange d'un acide gras libre insaturé et d'un acide gras libre saturé.

De préférence, le raffinage physique, qui permet d'obtenir une teneur en acides gras libres supérieure à celle du raffinage chimique, est utilisé selon l'invention.

Typiquement, un condensat de désodorisation d'huile de palme utilisable selon l'invention est obtenu par raffinage physique. Il contient une proportion massique d'au moins 90 % en poids d'acides gras libres par rapport au poids total du condensat. Typiquement dans un tel condensat de désodorisation, l'acide palmitique représente au moins 40 % en poids par rapport au poids total des acides gras totaux (libres et estérifiés comme décrits précédemment) et notamment de 40 à 55 %, l'acide oléique au moins 30 % et notamment de 30 à 40 %, et l'acide linoléique au moins 5 % et notamment de 5 à 10 %. Un tel condensat de désodorisation d'huile de palme contient moins de 7 % de mono- di- et triglycérides, notamment moins de 5 % en poids par rapport au poids total du condensat.

Typiquement, un condensat de désodorisation d'huile d'olive utilisable selon l'invention est obtenu par raffinage physique, il contient une proportion massique d'au moins 35 % en poids, d'acides gras libres, par rapport au poids total du condensat. Typiquement dans un tel condensat de désodorisation, l'acide oléique représente au moins 60 %, en poids, par rapport au poids total des acides gras totaux et notamment de 60 à 75 % ; l'acide palmitique au moins 10 % et notamment de 10 à 15 % en poids, par rapport au poids total des acides gras totaux ; et l'acide linoléique au moins 8 % et notamment de 8 à 15 %, en poids, par rapport au poids total des acides gras totaux. Un tel condensat d'huile d'olive contient moins de 60 % de mono, di et triglycérides, notamment moins de 50 %, en poids, par rapport au poids total du condensat. Il peut également contenir une proportion massique de stérols allant de 0,5 à 3 %, en poids, par rapport au poids total du condensat.

Typiquement, un condensat de désodorisation d'huile de soja utilisable selon l'invention est obtenu par raffinage physique, il contient une proportion massique d'au moins 40 % en poids d'acides gras libres par rapport au poids total du condensat. Typiquement dans un tel condensat de désodorisation, l'acide linoléique représente au moins 45 %, en poids, par rapport au poids total des acides gras totaux et notamment de 45 à 55 % ; l'acide oléique au moins 18 % et notamment de 18 à 25 %%, en poids par rapport au poids total des acides gras totaux, et l'acide palmitique au moins 10 % et notamment de 10 à 16 %, en poids, par rapport au poids total des acides gras totaux. Un tel condensat d'huile de palme contient moins de 35 % de mono, di et triglycérides, notamment moins de 30 % en poids par rapport au poids total du condensat. Il peut également contenir une proportion massique de d'hydrocarbures (comprenant du squalène) allant de 5 à 15 % en poids par rapport au poids total du condensat.

Typiquement, un condensat de désodorisation d'huile de colza utilisable selon l'invention est obtenu par raffinage physique, il contient une proportion massique d'au moins 65 % en poids d'acides gras par rapport au poids total du condensat. Typiquement dans un tel condensat de désodorisation, l'acide linoléique représente au moins 35 % en poids par rapport au poids total des acides gras totaux et notamment de 35 à 45 % ; l'acide oléique au moins 20 % et notamment de 20 à 30 %, en poids, par rapport au poids total des acides gras totaux, et l'acide palmitique au moins 5 % et notamment de 5 à 15 %, en poids, par rapport au poids total des acides gras totaux.

La teneur en acide gras d'un condensat de désodorisation d'huile végétale peut être déterminée selon la norme NF EN ISO 12966-2. La composition glycéridique peut être déterminée selon la norme et NF EN 14105 et/ou selon les méthodes standards d'analyse des huiles, graisses et dérivés (Standard Methods for the Analysis of Oils, Fats and Derivatives) IUPAC 6.002. La composition en acide gras peut être déterminée selon la norme ISO 12966-2.

L'utilisation selon l'invention de condensats de désodorisation d'huile végétale en tant qu'additifs est avantageuse, car elle permet de valoriser des coproduits du raffinage des huiles végétales, qui sont généralement éliminés comme des déchets de raffinage. L'utilisation de condensats de désodorisation d'huiles végétale en tant qu'additifs plastifiants, pour modifier les propriétés mécaniques et de préférence pour augmenter la ductilité d'un matériau polymère thermoplastique, est donc particulièrement économique, car contrairement à l'état de la technique elle ne nécessite pas d'étape de synthèse chimique ou de purification dédiée pour produire l'additif.

En effet, dans l'invention, les coproduits du raffinage physique ou chimique peuvent être directement utilisés comme additifs plastifiants des matériaux polymères et induisent une amélioration des propriétés mécaniques desdits matériaux polymères, notamment une augmentation de la ductilité. Une telle amélioration est au moins du même ordre de grandeur, que celle obtenue avec des additifs plastifiants traditionnels de type adipate (par exemple l'adipate di-octyle ou DOA CAS N° 123-79-5), de typecitrate (par exemple le citrate tri butylique d'acétyle ou ATBC CAS N° 77-90-7), ou encore de type poly(éthylène glycol) (par exemple le PEG 400 CAS N°25322-68-3), en particulier pour les taux inférieurs à 20 % et notamment inférieur à 15 %.

L'utilisation des compositions d'acides gras libres, tels que définis dans la présente invention, en tant qu'additifs de matériau polymères thermoplastiques, en particulier l'utilisation des condensats de désodorisation d'huile végétale décrits, est compatible avec des applications dans le domaine alimentaire des matériaux polymères additivés (c'est à dire des mélanges polymères plus additifs) obtenus. En effet, selon les tests de migration globale de la réglementation UE (Règlement (UE) N°10/2011 de la Commission du 14 janvier 2011 concernant les matériaux et objets en matière plastique destinés à entrer en contact avec des denrées alimentaires) pour trois milieux simulateurs d'aliments, des produits réalisés à partir des matériaux polymères additivés de l'invention, notamment à partir de PLA additivé (c'est-à-dire du matériau à base d'acide polylactique ou polylactide) selon l'invention présentent de préférence un taux de migration d'additif (constitué par les composés du mélange d'acides gras libres selon l'invention) inférieur ou égale à 60 mg / kg d'aliments.

L'additif selon l'invention permet ainsi de modifier les propriétés mécaniques d'un matériau polymère thermoplastique. Les modifications obtenues sont fonction du polymère thermoplastique additivé, et sont ainsi utilisées en fonction de l'application visée (emballage, etc.).

De telles modifications peuvent correspondre à une modification de l'une au moins des propriétés mécaniques suivantes :
- une augmentation de la ductilité (de préférence en ne modifiant pas ou peu les caractéristiques intrinsèques du polymère comme son module d'Young),
- une diminution du module d'Young (éventuellement associée à une diminution de la contrainte à l'écoulement et/ou de la contrainte à la rupture),
- une augmentation de l'allongement à l'écoulement (de préférence sans modification significative des contraintes à l'écoulement et à la rupture).

L'élongation à la rupture ou l'allongement à la rupture (noté A ou A_{R} %) est une caractéristique définissant la capacité d'un matériau à s'allonger avant de rompre lorsqu'il est sollicité en traction. A_{R} (%) se détermine par un essai de traction uni-axiale, notamment selon la norme ISO 527-2.

L'allongement à l'écoulement, ou déformation au seuil d'écoulement (A_{E} %), correspond à la déformation minimale qui engendre une déformation irréversible du matériau, sans cassure du matériau.

Le module d'Young (E), ou module d'élasticité (longitudinale,) ou encore module de traction, est la constante qui relie la contrainte de traction (ou de compression) et le début de la déformation d'un matériau élastique isotrope. Il s'exprime en MPa.

Ces paramètres, ainsi que les valeurs des contraintes à l'écoulement (σ_{E}) ou à la rupture (σ_{R}), peuvent être mesurés par un test de traction uni-axiale, selon la norme ISO 527-2.

Par augmentation de l'élongation à la rupture, on entend que l'élongation à la rupture du matériau polymère additivé est au moins 1,5 fois, au moins 3 fois ,au moins 4 fois, au moins 5 fois, au moins 10 fois, au moins 15 fois, au moins 20 fois ou au moins 30 fois plus élevée que l'élongation à la rupture du matériau non additivé par la composition en acides gras libres de l'invention et notamment par un condensat de désodorisation d'huile végétale selon l'invention.

Une augmentation de l'élongation à la rupture d'au moins 1,5 fois et notamment d'au moins 1,8 fois peut être par exemple obtenue avec un polymère de type PHA, comme le PHBV.

Dans certains modes de réalisation, et particulier avec le PLA, l'utilisation d'un condensat de désodorisation d'huile végétale selon l'invention en tant qu'additif permet d'obtenir un matériau polymère thermoplastique additivé, ayant une élongation à la rupture au moins égale à 20 % et notamment au moins égale à 30 %, plus particulièrement au moins égale à 55 %. Dans certains modes de réalisation, l'élongation à la rupture, obtenue pour un matériau polymère thermoplastique additivé selon l'invention, comme le PLA additivé, est au moins égale à 130 %. De tels résultats sont typiquement obtenus lors de l'utilisation, dans des proportions massiques de 10 ou 15 %, de condensats de désodorisation, ou de mélange d'acides gras libres selon l'invention, dans lesquels le taux d'acides gras libres est au moins égale à 90 %. A titre d'exemple elle est d'au moins 180 % pour un matériau PLA additivé de 15 % en poids de condensat de désodorisation d'huile de palme par rapport au poids total du matériau additivé. Dans de tels mode de réalisation, l'invention permet d'obtenir un matériau polymère thermoplastique additivé, et typiquement du PLA additivé, dont l'élongation à la rupture va de 30 à 300 % et notamment de 50 à 300 %. Dans certains modes de réalisation, l'additivation d'un matériau polymère thermoplastique avec le mélange d'acides gras libres, généralement sous forme d'une composition d'acides gras libres et notamment compris dans un condensat de désodorisation d'huile(s) végétale(s), et de préférence consistant en un condensat de désodorisation d'huile végétale, tels que définis ci-dessus, ne modifie pas ou peu la valeur du module d'Young dudit matériau polymère.

Par « *ne modifie pas ou peu* », on entend que la diminution de la valeur du module d'Young, conséquente à l'additivation du matériau polymère avec le mélange d'acides gras libres selon l'invention, est inférieure ou égale à 40 %, notamment inférieure ou égale à 35 %, 30 %, 25 %, 20 % ou encore 15 %. En particulier, dans certains modes de réalisation, l'additivation d'un matériau polymère thermoplastique, comme notamment le PLA, le PHBV, ou leurs mélanges, avec le mélange d'acides gras libres selon l'invention permet d'obtenir un matériau polymère thermoplastique additivé, et notamment du PLA additivé, du PHBV additivé ou un mélange PLA/PHB additivé, dont le module d'Young est supérieur à 1100 MPa notamment pour le PLA ou les mélanges PLA/PHBV (le PLA étant majoritaire), ou supérieur à 750 MPa pour le PHBV additivé.

A titre de comparaison, l'utilisation d'ATBC, en quantité suffisante (15% en masse) pour engendrer une amélioration significative de l'élongation à la rupture, fait chuter le module d'Young à 270 MPa pour le PLA.

Par exemple l'utilisation de condensat d'un mélange d'acides gras libres selon l'invention permet d'obtenir du PHBV additivé dont le module d'Young n'est pas modifié de plus de 10 %.

D'autre part, l'invention permet d'obtenir du PHBV additivé dont l'élongation à la rupture est augmenté d'au moins 60 %, et de préférence d'au moins 80 %, et dont le module d'Young n'est pas modifié de plus de 10 %. Pour un tel matériau, la valeur du module d'Young est généralement supérieure à 500 MPa, notamment supérieure à 600 MPa, et typiquement supérieure à 700 MPa. De tels résultats sont de préférence obtenus avec une proportion massique d'un mélange d'acides gras libres de l'invention (typiquement un condensat de désodorisation) de 10 %.

Dans certains modes de réalisation, et typiquement pour des matériaux à base de PLA (en tant que polymère majoritaire ou unique) et/ou de PHBV, l'additivation d'un matériau polymère thermoplastique avec le mélange d'acides gras libres, généralement sous forme d'une composition d'acides gras libres et notamment compris dans un condensat de désodorisation d'huile(s) végétale(s) tels que définis ci-dessus, maintient la valeur de contrainte à l'écoulement à au moins 20 % et de préférence au moins 25 %, de préférence 30 %, de la valeur initiale de la contrainte à l'écoulement du polymère ou du matériau polymérique non additivé.

En particulier, l'additivation d'un matériau polymère thermoplastique avec le mélange d'acides gras libres selon l'invention permet d'obtenir un matériau polymère thermoplastique additivé, et notamment du PLA additivé, dont la contrainte à l'écoulement est supérieure à 20 MPa. Elle permet également d'obtenir du PHBV additivé dont la contrainte à l'écoulement est supérieure à 16, soit une modification inférieure à 8 %.

Dans certains modes de réalisation l'additivation d'un matériau polymère avec un mélange d'acides gras libres selon l'invention permet d'obtenir un matériau polymère additivé dont l'allongement (ou déformation) à l'écoulement (A_{E}) est augmenté de préférence d'un facteur 2, notamment d'un facteur 5, et de préférence d'un facteur 8 ou d'un facteur 9. Typiquement un tel matériau additivé est obtenu avec des polyamides, comme le PA11. Généralement on observe également que la contrainte à l'écoulement d'un tel matériau additivé n'est pas significativement modifiée (modification inférieure à 0,5 %). A titre d'exemple pour le PA11 additivé (typiquement avec une proportion massique de 10 % d'additif selon l'invention), une contrainte à l'écoulement de l'ordre de 30 à 40 MPa (notamment de 34 à 35 MPa pour le PA11 additivé avec un condensat de désodorisation d'huile de palme) est conservée alors que l'allongement à l'écoulement du PA11 est augmenté d'au moins un facteur 8.

Enfin, dans certains modes de réalisation, l'utilisation d'un additif selon l'invention permet de diminuer le module d'Young d'un matériau polymère, comme le PHB. Ainsi une diminution allant de 20 à 40 %, de préférence de 25 à 35 % du module d'Young est obtenue. Une telle diminution permet d'augmenter la souplesse (ou diminuer la rigidité) du matériau polymère. Eventuellement, dans de tels modes de réalisation, une diminution de la contrainte à l'écoulement et/ou de la contrainte à la rupture allant de 15 à 25 % peut être obtenue.

Selon l'invention, la ductilité, ou élongation à la rupture, le module d'Young, la contrainte à l'écoulement et l'allongement à l'écoulement peuvent être mesurés selon la norme ISO 527-2 (décrivant notamment l'utilisation d'éprouvettes altères type 5A d'épaisseur environ 1 mm ; un conditionnement préalable avant étude de 72 h à 23 °C sous 50 % d'humidité relative ; une vitesse de traction de 5 mm/min ou de 25 mm/min ainsi qu'une température de 23 °C et une humidité relative de 50 % lors de la mesure).

Généralement, l'additivation d'un matériau polymère thermoplastique avec le mélange d'acides gras libres généralement sous forme d'une composition d'acides gras libres et notamment compris dans un condensat de désodorisation d'huile(s) végétale(s), tels que définis ci-dessus, ne modifie pas ou peu la température de transition vitreuse (Tg) du matériau polymère thermoplastique. La température de transition vitreuse caractérise la température en dessous de laquelle le matériau polymère est dans un état vitreux (solide). Au-delà de cette température, le matériau polymère se ramollit et devient caoutchouteux, ce qui limite son utilisation. La température de transition vitreuse peut être mesurée selon l'invention par calorimétrie différentielle à balayage avec modulation de température (TMDSC, Temperature Modulated Differential Scanning Calorimetry), avec une vitesse de chauffage de 2 °C/min, une amplitude de modulation de température de 0,318 °Cet une période de modulation de 60 s. Les mesures sont habituellement effectuées sous une atmosphère azote à 50 ml/min.

Par « *ne modifie pas ou peu »* la température de transition vitreuse, on entend, l'additivation d'un matériau polymère thermoplastique avec une composition d'acide gras selon l'invention diminue la température de transition vitreuse de moins de 15 °C, notamment moins de 10 °C, ou moins de 6 °C.

L'invention se rapporte également à un matériau thermoplastique additivé comprenant au moins un polymère thermoplastique additivé par un mélange d'acides gras libres tels que défini précédemment. Dans certains modes de réalisation, le matériau thermoplastique comprend comme seul additif un mélange d'acides gras libres selon l'invention.

Un tel polymère additivé selon l'invention présente des propriétés mécaniques modifiées. Ces propriétés mécaniques, notamment de résistance à la rupture permettent notamment d'améliorer la processabilité du matériau polymère. Par exemple l'additivation de certains polymères comme le PLA, le PHBV ou leurs mélanges, permet leur mise en oeuvre dans des procédés d'extrusion soufflage ou d'extrusion gonflage. Typiquement un tel polymère additivé selon l'invention présente une élongation à la rupture (ductilité) augmentée d'au moins 1,5 fois.

Dans certains modes de réalisation, l'invention permet d'obtenir un matériau polymère, notamment du PHB additivé, dont le module d'Young est diminué d'au moins 30 %, sans modification des autres propriétés mécaniques dudit polymère, comme l'élongation à la rupture ou l'allongement à l'écoulement.

Dans certains modes de réalisation encore, le matériau polymère additivé présente une augmentation de l'allongement à l'écoulement permettant d'augmenter son élasticité.

De préférence, le matériau polymère thermoplastique comprend au moins un polymère thermoplastique choisi parmi les polyamides (notamment le PA11) les polyesters de la famille des polyéthylènes téréphtalate et notamment le polyéthylène téréphtalate glycolysé (PETG), ou les polyesters biodégradables et notamment les polyesters de la famille des polyhydroxyalcanoates (PHAs) comme le PHB ou le PHBV.

Dans un mode de réalisation préféré, le polymère thermoplastique est biodégradable, en particulier il s'agit d'un polyester biodégradable, comme le PLA, le PHB ou le PHBV. De préférence le polymère biodégradable est le PLA (acide polylactique ou polylactide) ou le PHBV.

Dans certains modes de réalisation de l'invention, on utilise un mélange de polymères thermoplastiques. Par exemple on peut utiliser un mélange de PLA et de PHBV. De préférence la proportion massique du PLA vis-à-vis du poids total du mélange de polymères varie de 50 à 95 %, notamment de 85 à 95 %. Typiquement, la proportion massique de PLA dans le mélange de polymère est de 90 %.

De préférence la composition d'acides gras libres est comprise dans un condensat de désodorisation d'huile végétale. De préférence ladite composition d'acides gras libres est un condensat de désodorisation d'huile végétale. Des condensats de désodorisation particulièrement adaptés à l'invention sont les condensats de désodorisation d'huile de palme, de soja, de colza, d'olive ou de tournesol, notamment tels que définis précédemment.

Le matériau polymère thermoplastique additivé peut comprendre une proportion d'une composition d'acide gras libres selon l'invention et en particulier d'un condensat de désodorisation d'huile végétale, allant de 1 à 20 %, notamment de 1,25 à 20%, de 5 à 20 %, ou de 5 à 15 % en poids par rapport au poids total du matériau polymère thermoplastique additivé avec ledit mélange d'acide gras libres.

De préférence le mélange d'acides gras libres est compris dans un condensat de désodorisation d'huile végétale, ou est un condensat de désodorisation d'huile végétale.

Dans un mode de réalisation particulier de l'invention, un matériau polymère thermoplastique comme le PLA additivé selon l'invention, tel que défini ci-dessus, présente les propriétés mécaniques suivantes : un allongement à la rupture allant de '30 à 300 %, un module d'Young supérieur à 1200 MPa, une contrainte à l'écoulement supérieure à 15 MPa.

Dans certains modes de réalisation un matériau polymère thermoplastique comme le PHBV additivé selon l'invention présente les propriétés mécaniques suivantes : un allongement (ou élongation) à la rupture supérieur à 4 %, un module d'Young supérieure à 700 MPa et une contrainte à l'écoulement supérieure à 15 MPa.

Enfin, dans certains modes de réalisation, des matériaux polymères additivés de l'invention, comme les polyamides et notamment le PA11, présentent un allongement à l'écoulement supérieur à 60 %, notamment allant de 60 à 75 % et un module d'Young inférieur à 400 MPa, notamment allant de 250 à 400 MPa.

Un matériau polymère additivé selon l'invention, et notamment le PLA additivé, est de préférence caractérisé par une température de transition vitreuse allant de 35 à 90 °C, notamment de 38 à 90 °C, notamment de 40 à 90 °C, notamment de 45 à 90 °C, de 45 à 80 °C, de 45 à 70 °C, de 45 à 60 °C, de45 à 55 °C ou de 48 à 55 °C à la pression atmosphérique (soit aux environs de l'atmosphère normale). De façon générale, la température de transition vitreuse d'un matériau additivé selon l'invention est supérieure à 30, notamment supérieur à 35 °C et notamment supérieure à 38 °C, de préférence supérieure à 40 °C et de préférence encore supérieure à 45 °C ou à 48 °C.

Les propriétés mécaniques décrites dans l'invention (élongation à la rupture, module d'Young, allongement à l'écoulement et contrainte à l'écoulement) sont toutes mesurées en traction uni-axiale selon la norme ISO 527-2. La température de transition vitreuse est mesurée par TMDSC (temperature modulated differential scanning calorimetry) dans les conditions précédemment décrites.

Dans un mode de réalisation de l'invention, le matériau polymère thermoplastique est sous forme de granulés ou d'un film. Les granulés peuvent être stockés avant d'être transformés en un produit final, notamment en film et typiquement, en film utilisable en tant qu'emballage alimentaire.

Le matériau polymère thermoplastique de l'invention peut également être sous forme d'un emballage, par exemple d'un emballage alimentaire.

De préférence un emballage selon l'invention est biosourcé et/ ou biodégradable. Par exemple un sac en matière plastique, ou un film plastique peut être réalisé à base des granulés additivés de l'invention ou d'un matériau polymère thermoplastique de l'invention.

Par exemple, le matériau polymère thermoplastique de l'invention peut également être sous forme d'un film souple de PLA additivé avec une composition d'acides gras libres telle que décrite dans la demande. Dans un mode de réalisation préféré, un tel PLA additivé selon l'invention présente un allongement à la rupture allant de 20 à 300 %, notamment de 30 à 300 % et de 55 à 300 % un module d'Young supérieur à 1200 MPa, et une contrainte à l'écoulement supérieure à 15 MPa, notamment supérieure à 45 MPa (ces paramètres étant mesurés selon la norme ISO 527-2), dont la température de transition vitreuse est supérieure ou égale à 38°C, de préférence supérieure ou égale à 45 °C, et en particulier varie de 45 à 55 °C, ledit film comprenant une proportion massique d'un condensat de désodorisation allant de 5 à 20 %, notamment de 5 à 30 % en poids, par rapport au poids du film.

Les matériaux et emballages selon l'invention sont stables au cours du temps. En particulier, leur température de transition vitreuse est stable et varie de moins de 10, en particulier de moins de 5, ou encore de moins de 3 °C au cours du temps (notamment sur une période d'au moins 5 mois et de préférence d'au moins 9 mois).

La présente invention se rapporte également à un procédé de fabrication d'un matériau polymère thermoplastique tel que défini précédemment, caractérisé en ce qu'il comprend une étape d'additivation (ou de mélange) d'au moins un matériau polymère thermoplastique avec un mélange d'acides gras libres, tel que défini précédemment.

Dans un mode de réalisation préféré, la composition d'acides gras libres est comprise dans un condensat de désodorisation d'huile végétale selon l'invention.

Dans un mode de réalisation, l'étape d'additivation du matériau polymère thermoplastique est réalisée par compoundage et permet l'obtention de poudre ou de granulés (compounds) par extrusion monovis couplée ou non à des mélangeurs statiques, ou par extrusion bivis à vis coniques ou vis corotatives ou contrarotatives, à vis engrenantes ou non engrenantes, à profils interpénétrés ou non, ou encore par mélangeur interne. Le compoundage pour l'obtention de granulés est un procédé d'extrusion-granulation permettant le mélange par fusion d'un matériau polymère thermoplastique avec un ou plusieurs additifs et notamment selon l'invention, avec au moins un mélange d'acides gras libres tels que défini précédemment. Il permet d'obtenir un matériau polymère additivé, formant une matière plastique sous forme de granulés aux caractéristiques physiques ou thermiques propres. Le compoundage est généralement réalisé par une extrudeuse bi-vis conventionnelle de préférence équipée de vis corotatives engrenantes interpénétrées. Le cas échéant, le matériau polymère thermoplastique additivé présente notamment une élongation à la rupture au moins 3 fois supérieure à celle du matériau polymère non additivé avec une composition d'acide gras selon l'invention comme décrit précédemment. Comme décrit également, dans certains modes de réalisation, le module d'Young et la température de transition vitreuse ne sont pas ou peu modifiés.

De façon générale, il a été observé selon l'invention que l'additivation d'un polymère thermoplastique, ou d'un mélange de polymères thermoplastiques, avec des mélanges d'acides gras libres, tels que définis dans la présente demande, améliore la processabilité des polymères additivés obtenus. En particulier, ces polymères, ou ces mélanges de polymères, peuvent par exemple être mis en forme aisément dans des procédés de thermocompression, extrusion cast ou extrusion soufflage de gaine. Il a notamment été observé que le procédé d'extrusion soufflage de gaine de matériaux PLA ou PLA/PHBV ne peuvent être mis en oeuvre sur les polymères non additivés.

Ainsi, dans certains modes de réalisation, le procédé selon l'invention comprend une étape supplémentaire de mise en forme des granulés par une extrudeuse monovis ou bivis conventionnelle pour l'obtention de films, réalisant une extrusion filière plate puis un calandrage ou un cast ou une extrusion soufflage de gaine, et permettant d'obtenir des films à partir des granulés additivés de l'invention.

Alternativement, l'obtention de film peut être réalisée en une seule étape selon deux procédés différents :
- réalisation du film par tous types d'extrusion bivis pour l'additivation couplée à une pompe à engrenage et une filière plate et une unité de calandrage ou de cast ou une filière de soufflage de gaine couplée à une unité de soufflage de gaine,
- réalisation du film par extrusion monovis pour l'additivation avec vis de mélange trois zones couplée ou non à des mélangeurs statiques et une filière plate et une unité de calandrage ou de cast ou une filière de soufflage de gaine couplée à une unité de soufflage de gaine.

L'invention se rapporte également aux matériaux, granulés et films obtenus selon les procédés décrits ci-dessus.

### FIGURES

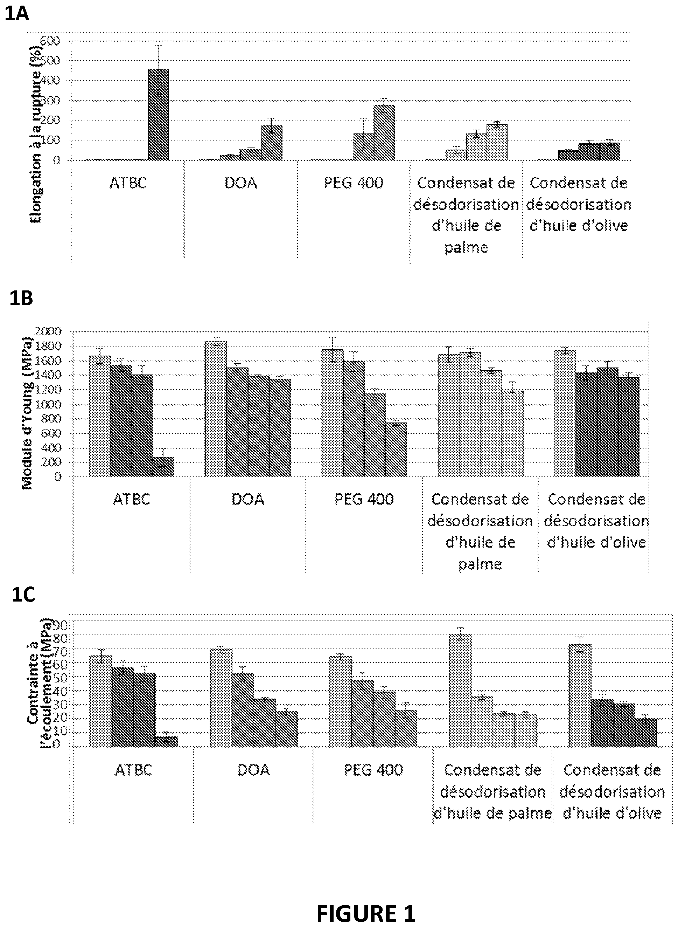

Figure 1 : 1A : diagramme illustrant la valeur d'élongation à la rupture (%) pour le PLA additivé de gauche à droite d'ATBC, de DOA, de PEG 400 (additifs pétrosourcés), de condensat de désodorisation d'huile de palme et d'huile d'olive(additifs biosourcés selon l'invention) dans des proportions massiques de (pour chaque groupe de gauche à droite) 0, 5, 10 et 15 % ; 1B : diagramme illustrant la valeur du module d'Young (MPa) pour le PLA additivé de gauche à droite d'ATBC, de DOA, de PEG 400 (additifs pétrosourcés), de condensat de désodorisation d'huile de palme et d'huile d'olive (additifs biosourcés selon l'invention) dans des proportions massiques de (pour chaque groupe de gauche à droite) 0, 5, 10 et 15 %; 1C : diagramme illustrant la valeur de contrainte à l'écoulement (MPa) pour le PLA additivé de gauche à droite d'ATBC, de DOA, de PEG 400 (additifs pétrosourcés), de condensat de désodorisation d'huile de palme et d'huile d'olive (additifs biosourcés selon l'invention) dans des proportions massiques de (pour chaque groupe de gauche à droite) 0, 5, 10 et 15 %.

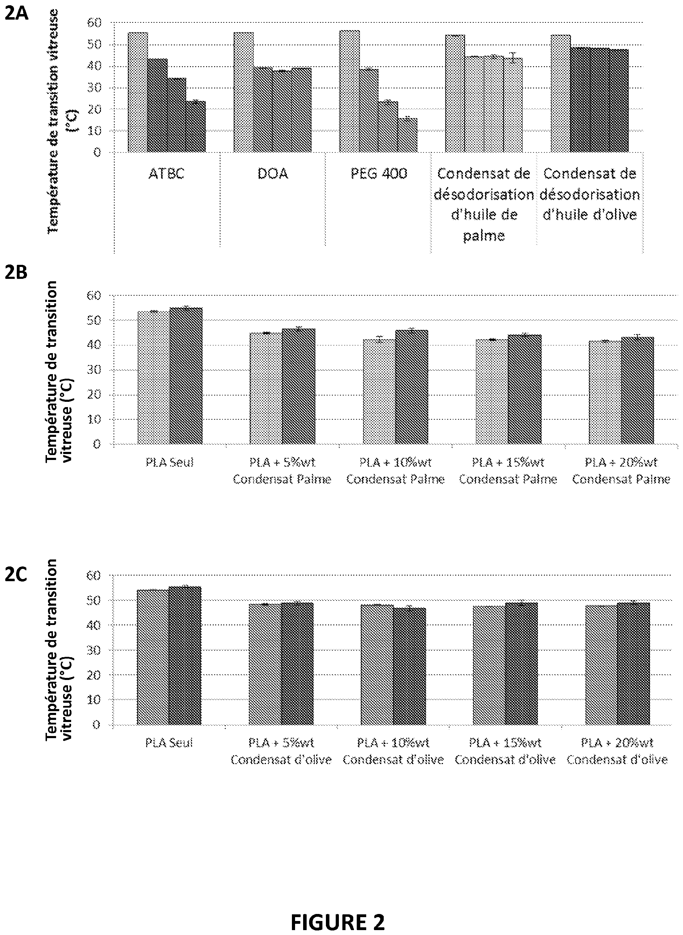

Figure 2 : 2A diagramme illustrant la valeur température de transition vitreuse (Tg en °C) pour le PLA additivé de gauche à droite d'ATBC, de DOA, de PEG 400 (additifs pétrosourcés), de condensat de désodorisation d'huile de palme et d'huile d'olive (additifs biosourcés selon l'invention) dans des proportions massiques de (pour chaque groupe de gauche à droite) 0, 5, 10 et 15 % ; 2B: Comparaison de la température de transition vitreuse (Tg) à 20 (gris clair) et 170 jours (gris foncé) du PLA additivé avec un condensat de désodorisation d'huile de palme dans des proportions massiques (de gauche à droite) de 0, 5, 10, 15 ou 20 % en poids par rapport au poids total du mélange. 2C : Comparaison de la température de transition vitreuse (Tg) à 10 (gris clair) et 290 jours (gris foncé) du PLA additivé avec un condensat de désodorisation d'huile d'olive (2C) dans des proportions massiques (pour chacun des 5 groupes de gauche à droite) de 0, 5, 10, 15 ou 20 % en poids par rapport au poids total du mélange.

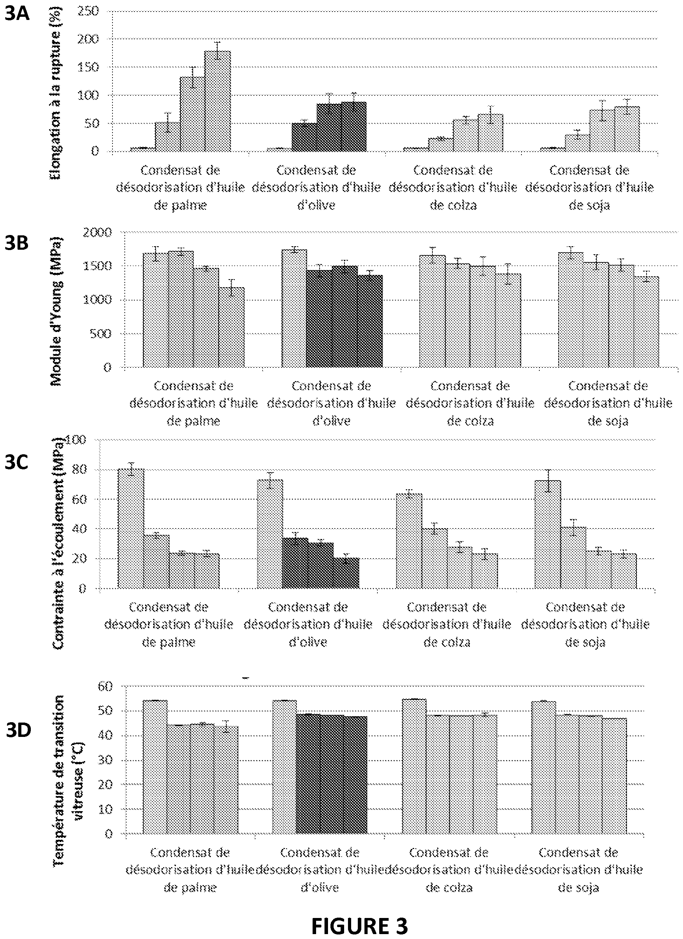

Figure 3 : 3A-D diagrammes illustrant la valeur d'élongation à la rupture (%) (3A), la valeur du module d'Young (MPa) (3B), la valeur de contrainte à l'écoulement (MPa) (3C) et la température de transition vitreuse (Tg en °C) (3D) pour le PLA additivé de gauche à droite de condensat de désodorisation d'huile de palme, d'olive, de colza et de dans des proportions massiques de (pour chaque groupe de gauche à droite) 0, 5, 10 et 15 %.

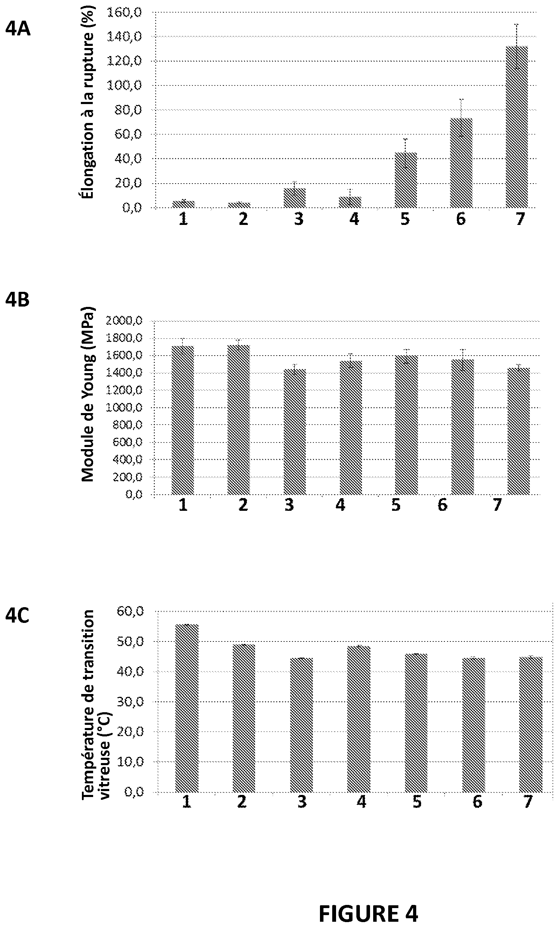

Figure 4 : 4A-D diagrammes illustrant la valeur d'élongation à la rupture (%) (4A), la valeur du module d'Young (MPa) (4B), et la température de transition vitreuse (Tg en °C) (4C) pour le PLA non additivé (composition 1) ou additivé de différentes formulations d'acides gras libres (compositions 2 à 7)

### EXEMPLES

### Matériels et méthodes :

Les exemples de condensats de désodorisation utilisés dans les résultats expérimentaux décrits ci-après ont été récupérés lors de l'étape de désodorisation d'un procédé de raffinage physique d'huile d'olive, de soja, de colza, de palme ou de tournesol.

L'étape de désodorisation a été réalisée dans les conditions suivantes : une température comprise entre 240 et 260 °C, une pression absolue inférieure à 5 mbar, une durée comprise entre 2 et 3 h et avec une quantité de vapeur injectée de l'ordre de 8 kg/h. La composition des condensats de désodorisation d'huile obtenus a été analysée par chromatographie en phase gazeuse.

Ces condensats présentent une grande variabilité de leur composition en acides gras. Ils sont décrits à titre illustratif et les résultats montrent que la présence d'un mélange d'acides gras libres saturés et insaturés, quelle que soit la composition exacte en acides gras permet d'obtenir une amélioration de la ductilité du polymère testé.

### 1) Condensats d'huile de soja : composition moyenne

| **Analyse** | **Résultats** | | **Unité** | **Méthode** |
|---|---|---|---|---|
| **Indice d'acide** | **68,43** | | mg KOH/g | NF EN ISO 660 |
| **Indice de saponification** | **157,9** | | mg KOH/g | NF EN ISO 3657 |
| **Teneur en acides gras** | **76** | | g/100g produit | NF EN ISO 12966-2 |
| **Composition glycéridique** | Acides gras libres | 43.08 | % | IUPAC 6.002 et NF EN 14105 |
| | Mono glycérides | 2.92 | % | |
| | Cholestérol | **1,05** | % | |
| | Stérols | **8,69** | % | |
| | Diglycérides | **8,96** | % | |
| | Tri glycérides | **16,84** | % | |
| | Squalène + hydrocarbures | **13,78** | % | |
| | Non identifiés | **4,59** | % | |

Composition en acides gras (NF EN 12966-2)

| **ACIDE GRAS** | **Nom usuel** | **%** |
|---|---|---|
| C12 : 0 | Acide Laurique | **0,8** |
| C14 : 0 | Acide Myristique | **0,4** |
| C16 : 0 | Acide Palmitique | **12,3** |
| C18 : 0 | Acide Stéarique | **4,1** |
| C18 : 1 cis | Acide Oléique | **21,7** |
| C18 : 2 cis | Acide Linoléique | **49,7** |
| C18 : 3 trans | | **0,4** |
| C18 : 3 cis | Acide Linolénique | **6,0** |
| C20 : 0 | Acide Arachidique | **0,3** |
| C20 : 1 | Acide Eicosénoïque | **0,2** |
| C22 : 0 | Acide Béhénique | **0,5** |
| C24 : 0 | Acide Lignocérique | **0,2** |
| non identifié | | **3,4** |

### 2) Condensat d'huile de palme : composition moyenne

| **Analyse** | **Résultats** | | **Unité** | **Méthode** |
|---|---|---|---|---|
| **Indice d'acide** | **201,03** | | mg KOH/g | NF EN IS0 660 |
| **Indice de saponification** | 205,7 | | mg KOH/g | NF EN ISO 3657 |
| **Teneur en acides gras** | **100** | | g/100g produit | NF EN ISO 12966-2 |
| **Composition glycéridique** | Acides gras libres | **95,37** | % | IUPAC 6.002 et NF EN 14105 |
| | Mono glycérides | **1,66** | % | |
| | Cholestérol | **0** | % | |
| | Stérols | **0** | % | |
| | Di glycérides | **2,24** | % | |
| | Tri glycérides | **0,65** | % | |
| | Esters d'acides gras | **0** | % | |
| | Non identifiés | **0** | % | |

Composition en acides gras (NF EN 12966-2)

| **ACIDE GRAS** | **Nom usuel** | **%** |
|---|---|---|
| C12 : 0 C14 : 0 | Acide Laurique Acide Myristique | **0,4 1,3** |
| C16 : 0 | Acide Palmitique | **49,8** |
| C16 : 1 | Acide Palmitoléique | **0,2** |
| C18 : 0 | Acide Stéarique | **4,1** |
| C18 : 1 trans | | **0,2** |
| C18 : 1 cis | Acide Oléique | **35,0** |
| C18 : 2 trans | | **0,1** |
| C18 : 2 cis | Acide Linoléique | **7,7** |
| C18 : 3 cis | Acide Linolénique | **0,3** |
| C20 : 0 | Acide Arachidique | **0,3** |
| C20 : 1 | Acide Eicosénoïque | **0,1** |
| non identifié | | **0,7** |

### 3) Condensat d'huile de colza : composition moyenne

| **Analyse** | **Résultats** | **Unité** | **Méthode** |
|---|---|---|---|
| **Indice d'acide** | **65,29** | mg KOH/g | NF EN ISO 660 |
| **Indice de saponification** | **125,1** | mg KOH/g | NF EN ISO 3657 |
| **Teneur en acides gras** | **67,6** | g/100g produit | NF EN ISO 12966-2 |

Composition en acides gras (NF EN ISO 12966-2) :

| **ACIDE GRAS** | **Nom usuel** | **%** |
|---|---|---|
| C16 : 0 | Acide Palmitique | **7,4** |
| C18 : 0 | Acide Stéarique | **3,4** |
| C18 : 1 cis | Acide Oléique | **27,3** |
| C18 : 2 cis | Acide Linoléique | **41,7** |
| C18 : 3 trans | | **0,7** |
| C18 : 3 cis | Acide Linolénique | **1,5** |
| C20 : 0 | Acide Arachidique | **0,5** |
| C20 : 1 | Acide Eicosénoïque | **0,3** |
| C22 : 0 | Acide Béhénique | **1,0** |
| C24 : 0 | Acide Lignocérique | **0,5** |
| non identifié | | **15,9** |

### 4) Condensat d'huile d'olive : composition moyenne

| **Analyse** | **Résultats** | | **Unité** | **Méthode** |
|---|---|---|---|---|
| **Indice d'acide** | **47,73** | | mg KOH/g | NF EN ISO 660 |
| **Indice de saponification** | **162,2** | | mg KOH/g | NF EN ISO 3657 |
| **Teneur en acides gras** | **79,3** | | g/100g produit | NF EN ISO 12966-2 |
| **Composition glycéridique** | Acides gras libres et composés associés | **39,24** | % | IUPAC 6.002 et NF EN 14105 |
| | Mono glycérides + squalène | **15,05** | % | |
| | Cholestérol | **0** | % | |
| | Stérols | **1,63** | % | |
| | Di glycérides | **8,44** | % | |
| | Tri glycérides | **33,37** | % | |
| | Esters d'acides gras | **1,07** | % | |
| | Non identifiés | **1,20** | % | |

Composition en acides gras (NF EN ISO 12966-2)

| **ACIDE GRAS** | **N om usuel** | **%** |
|---|---|---|
| C10 : 0 | Acide Caprique | **0,1** |
| C16 : 0 | Acide Palmitique | **11,3** |
| C18 : 0 | Acide Stéarique | **2,5** |
| C18 : 1 trans | | **1,2** |
| C18 : 1 cis | Acide Oléique | **68,3** |
| C18 : 2 trans | | **0,1** |
| C18 : 2 cis | Acide Linoléique | **10,8** |
| C18 : 3 cis | Acide Linolénique | **0,6** |
| C20 : 0 | Acide Arachidique | **0,4** |

| **ACIDE GRAS** | **Nom usuel** | **%** |
|---|---|---|
| C20 : 1 | Acide Eicosénoïque | **0,4** |
| C24 : 0 | Acide Lignocérique | **0,1** |
| non identifié | | **4,3** |

### 5) Condensat d'huile de tournesol : composition d'un exemple de lot de condensat d'huile de tournesol

| **Analyse** | **Résultats** | | **Unité** | **Méthode** |
|---|---|---|---|---|
| **Indice d'acide** | **187,7** | | mg KOH/g | NF EN ISO 660 |
| **Indice de saponification** | **194** | | mg KOH/g | NF EN ISO 3657 |
| **Teneur en acides gras** | **93,6** | | g/100g produit | NF EN ISO 12966-2 |
| **Composition glycéridique** | Acides gras libres | **98,9** | % | IUPAC 6.002 et NF EN 14105 |
| | Mono glycérides | **0** | % | |
| | Cholestérol | **0** | % | |
| | Stérols | **0,9** | % | |
| | Di glycérides | **0** | % | |
| | Tri glycérides | **0** | % | |
| | Esters d'acides gras | **0** | % | |
| | Non identifiés | **0,3** | % | |

Composition en acides gras (NF EN ISO 12966-2) lot E14-9234

| **ACIDES GRAS** | **Nom usuel** | **%** |
|---|---|---|
| C12 : 0 | Acide Laurique | **0,2** |
| C14:0 | Acide Myristique | **0,1** |
| C16 : 0 | Acide Palmitique | **8,4** |
| C16 : 1 | Acide Palmitoléique | **0,2** |
| C17:1 | | **<0,1** |
| C18 : 0 | Acide Stéarique | **3,9** |
| C18 : 1 cis | Acide Oléique | **26,6** |
| C18 : 2 cis | Acide Linoléique | **56,6** |
| C18 : 3 cis | Acide Linolénique | **0,2** |
| C20 : 0 | Acide Arachidique | **0,3** |
| C20 : 1 | Acide Eicosénoïque | **0,2** |
| C22 : 0 | Acide Béhénique | **0,4** |
| C24 : 0 | Acide Lignocérique | **0,1** |

### 6) Réalisation des mélanges et mesures des propriétés mécaniques et thermiques du polymère

Des granulés additivés ont été réalisés à partir de polylactide et d'acide polylactique (PLA) et d'additif (choisi parmi un condensat de désodorisation d'huile d'olive, de soja, de colza ou de palme) par un procédé d'extrusion granulation via l'utilisation d'une extrudeuse bivis conventionnelle équipée de vis coengrenantes corotatives interpénétrées. Un tel procédé permet l'obtention de granulés de PLA additivés contenant un taux moyen d'additif connu et maitrisé. Dans le cas d'espèces, le PLA a été additivé avec des proportions massiques en additifs allant de 5 à 20 % en poids d'additif par rapport au poids total du PLA additivé.

A titre de comparaison, du PLA additivé avec des proportions massiques d'additif plastifiant connus de l'état de la technique consistant en l'ATBC (acétyl tributyl citrate), le DOA (Dioctyl Adipate) ou le PEG (polyéthylène glycol) 400 allant de 5 à 20 % ont été également réalisés.

Les mesures de propriétés mécaniques : élongation à la rupture, module d'Young et contrainte à l'écoulement ont été réalisées selon la norme ISO 527-2, décrivant notamment l'utilisation d'éprouvettes altères type 5A d'épaisseur environ 1 mm ; un conditionnement préalable avant étude de 72 h à 23 °C sous 50 % d'humidité relative ; une vitesse de traction de 25 mm/min ainsi qu'une température de 23 °C et une humidité relative de 50 % lors de la mesure. Les valeurs indiquées (tableaux 1 et 2) correspondent aux valeurs moyennes obtenues sur 10 essais.

La mesure de la température de transition vitreuse a été réalisée par la méthode de calorimétrie différentielle à balayage avec modulation de température (TMDSC, Temperature Modulated Differential Scanning Calorimetry), avec une vitesse de chauffage de 2 °C/min, une amplitude de modulation de température de 0.318 °Cet une période de modulation de 60 s. Les mesures sont habituellement effectuées sous une atmosphère d'azote à 50 ml/min. Les valeurs de température de transition vitreuse indiquées (tableau 3) correspondent aux valeurs moyennes obtenues sur trois essais.

Les mesures des taux de migration globale des composés formant les condensats de désodorisation d'huile végétale, dans les aliments cibles ont été réalisées selon les tests de migration globale de la réglementation UE (Règlement UE N° 10/2011 de la Commission du 14 janvier 2011 concernant les matériaux et objets en matière plastique destinés à entrer en contact avec des denrées alimentaires) pour trois milieux simulateurs d'aliment.

Les mesures des propriétés mécaniques et des températures de transition vitreuse pour les différents PLA additivés ont été réalisées sur des films (ou plaques) ayant une épaisseur d'environ 1 mm obtenus par thermocompression des granulés additivés. Les mesures des taux de migration en milieux simulateur de contact alimentaire ainsi que les tests de Robinson caractérisant l'impact éventuel du matériau d'emballage sur la perception organoleptique des aliments ont été réalisés sur des films ayant une épaisseur d'environ 50 µm obtenus par extrusion monovis avec filière plate puis calandrage des granulés additivés.

Pour le PLA additivé avec le condensat de tournesol, le mélange PLA condensat (10 %) a été réalisé en extrudeuse bivis (PTW 16/40D Thermo Haake). Les granulés ont été ensuite thermocompressés pour obtenir des plaques (Thermocompression avec presse Gibrite).

Une plaque thermocompressée a été réalisée et sur cette plaque 4 éprouvettes de type 5A ont été découpées pour réaliser les tests de traction suivant la norme ISO 527-2.

Le test de traction est réalisé sur Instron 4507, avec une cellule de traction de 5kN. La vitesse de traction pour tous les essais est de 5 mm/min

### Résultats :

### 1) Effet de l'additivation avec un condensat de désodorisation sur les propriétés mécaniques du PLA

**Tableau 1 :**

| **Ductilité PLA** (élongation à la rupture) - ISO 527-2 - 25mm/min | | | | | |
|---|---|---|---|---|---|
| | **Condensat palme** | **Condensat olive** | **Condensat soja** | **Condensat colza** | **Condensat tournesol** |
| | Moyenne (%) | Moyenne (%) | Moyenne (%) | Moyenne (%) | Moyenne (%) |
| 0%massique additif | 6 | 5 | 6 | 5 | 6,4 |
| 5%massique additif | 51 | 50 | 30 | 23 | - |
| 10%massique additif | 132 | 85 | 73 | 56 | 100 |
| 15%massique additif | 179 | 88 | 79 | 66 | - |
| 20%massique additif | 84 | 67 | 52 | 73 | - |

Comme illustré dans le tableau 1, ainsi que dans la figure 1A, l'ajout d'une proportion massique de condensat de désodorisation d'une huile végétale allant de 5 à 15 % permet d'augmenter l'élongation à la rupture du PLA d'un facteur 4 en moyenne, pour une proportion massique de 5 % de condensat de colza à un facteur 30 pour une proportion massique de 15 % de condensat de désodorisation d'huile de palme, soit des valeurs d'élongation à la rupture de 22 à 178 %. Quelle que soit l'huile végétale employée, l'utilisation d'un condensat de désodorisation d'huile végétale dans des proportions massiques de 10 à 15 % permet d'obtenir une augmentation de l'élongation à la rupture du PLA au moins multipliée par 6, voir multipliée par 10, par rapport au PLA non additivé avec un condensat de désodorisation, soit une valeur d'élongation à la rupture pour le PLA additivé avec un condensat de désodorisation au moins égale à 40 %, voire à 55%.

L'utilisation de condensats d'huile végétale contenant une teneur importante en acides gras (notamment supérieure à 70 %) et en particulier en acides gras libres (notamment supérieure à 35 %) permet d'améliorer l'efficacité plastifiante du condensat et notamment l'effet d'augmenter l'effet sur l'élongation à la rupture du polymère. Le condensat d'huile de palme contenant une proportion d'acides gras proche de 100 % et une teneur en acide gras libres de l'ordre de 95 % permet ainsi d'obtenir les meilleurs effets avec des augmentations de la ductilité du PLA allant de 10 à 30 fois environ pour des proportions massiques de 5 ou 15 %.

Ainsi l'invention permet d'obtenir du PLA additivé, dont l'élongation à la rupture est au moins égale à 20 %, notamment supérieure à 50 ou à 60 % % pour des proportions massiques d'additif allant de 10 à 15 %. L'utilisation d'un condensat de désodorisation d'huile de palme dans des proportions massiques de 10 à 15 % permet en particulier d'obtenir une élongation à la rupture au moins égale à 50 % voir même supérieure à 130 %.

La figure 1 permet également d'illustrer que l'utilisation des condensats de désodorisation d'huile végétale et notamment d'huile de palme ou d'huile d'olive, et plus particulièrement le condensat de désodorisation d'huile de palme, permet d'obtenir des résultats sur l'augmentation de l'élongation à la rupture du PLA, du même ordre de grandeur que ceux obtenus avec un plastifiant traditionnel comme le DOA (Dioctyl Adipate) (voir fig. 3A). Le condensat de désodorisation d'huile de palme permet d'obtenir une plus forte augmentation de l'élongation à la rupture pour des proportions massiques inférieures, notamment pour une proportion massique de 10 %. Le PEG 400 n'est réellement efficace sur l'augmentation de la ductilité que pour des proportions massiques de 10 ou 15 %. Enfin l'ATBC, un plastifiant biodégradable peu toxique, utilisé notamment dans les vernis à ongles, permet d'obtenir une élongation à la rupture supérieure à 300 % mais il n'induit un effet significatif que pour une proportion massique minimale d'environ 15 %.

**Tableau : 2**

| **Module d'Young PLA -** ISO 527 - 2 - 25mm/min | | | | |
|---|---|---|---|---|
| | **Condensat palme** | **Condensat olive** | **Condensat soja** | **Condensat colza** |
| | Moyenne (MPa) | Moyenne (MPA) | Moyenne (MPA) | Moyenne (MPa) |
| 0%massique additif | 1680 | 1738 | 1694 | 1658 |
| 5%massique additif | 1713 | 1430 | 1550 | 1536 |
| 10%massique additif | 1458 | 1495 | 1516 | 1494 |
| 15%massique additif | 1179 | 1360 | 1344 | 1380 |
| 20%massique additif | 1133 | 1374 | 1216 | 1267 |

**Tableau : 3 :**

| | **PLA4060D** | **(PLA4060D + 10%wt) (Moyenne)** |
|---|---|---|
| **E (MPa)** | 1518 | 1307 |
| **σ_{E} (MPa)** | 56,6 | 20,9 |
| **A_{E} (%)** | 4,8 | 2,3 |
| **σ_{R} (Mpa)** | 50,7 | 20,0 |
| **A_{R} (%)** | 6,4 | 100,3 |

L'analyse des autres propriétés mécaniques du PLA mélangé avec des proportions variables d'additifs (voir tableau 2 ci-dessus) illustre que l'utilisation d'un condensat de désodorisation d'huile végétale selon l'invention permet de maintenir les valeurs du module d'Young (voir également Fig. 1B et 3B). En effet, quelle que soit l'huile végétale employée, l'utilisation d'un condensat de désodorisation de d'huile végétale pour augmenter la ductilité du PLA ne diminue pas le module d'Young de plus de 35 % environ. En particulier, pour des proportions massiques d'additif allant de 5 à 15 %, les condensats de désodorisation d'huile végétale diminuent le module d'Young de moins de 30 % et permet d'obtenir un mélange de PLA additivé dont le module d'Young est supérieur à 1200 MPa.

Les résultats du tableau 3, obtenus avec du PLA additivé par un condensat de désodorisation d'huile de tournesol, présentent les mêmes conclusions. L'utilisation d'un condensat de désodorisation d'huile de tournesol, pour augmenter la ductilité du PLA ne diminue pas le module d'Young de plus de 20 % environ et permet d'obtenir un mélange de PLA additivé dont le module d'Young est supérieur à 1300 MPA..

La figure 1B illustre que seul le DOA permet de maintenir la valeur du module d'Young, pour des proportions massiques dans lesquelles ces additifs sont efficaces. En effet, l'ATBC ne produit une augmentation significative de la ductilité que pour une proportion massique au moins égale à 15 %, proportion à laquelle il induit une diminution drastique du module d'Young pour le PLA.

La figure 1C montre que l'utilisation de condensats de désodorisation selon l'invention, et notamment de condensat de désodorisation d'huile de palme et d'olive permet d'obtenir du PLA additivé dont la contrainte à l'écoulement est supérieure à 20 MPa pour des proportions massiques d'additifs allant de 5 à 15 %. Pour des proportions massiques de 10 ou 15 %, les valeurs de contrainte à l'écoulement pour le PLA additivé avec les condensats de désodorisation d'huile végétale de l'invention sont similaires à celles obtenues avec le DOA ou le PEG 400. L'ATBC permet d'obtenir un PLA additivé avec une contrainte à l'écoulement supérieure à 50 MPa pour des proportions massiques de 5 ou 10 %. Comme indiqué précédemment, pour une proportion massique de 15 %, efficace sur l'augmentation de la ductilité (élongation à la rupture), la contrainte à l'écoulement du PLA additivé est inférieure à 10 MPa. Ces résultats sont similaires quelle que soit l'huile végétale à partir de laquelle est obtenu le condensat de désodorisation d'huile végétale (Fig.3C).

### 2) Effet de l'additivation avec un condensat d'huile végétale sur les propriétés thermiques du PLA

**Tableau 4 :**

| **Température Transition vitreuse PLA** - TM-DSC 2°C min | | | | |
|---|---|---|---|---|
| | **Condensat palme** | **Condensat olive** | **Condensat soja** | **Condensat colza** |
| | Moyenne (°C) | Moyenne (°C) | Moyenne (°C) | Moyenne (°C) |
| 0%massique additif | 54,7 | 55,4 | 55,1 | 55,3 |
| 5%massique additif | 50,2 | 49,6 | 51,4 | 51,8 |
| 10%massique additif | 49,4 | 49,4 | 49,7 | 49,7 |
| 15%massique additif | 49,1 | 48,7 | 49,5 | 49,1 |
| 20%massique additif | 49 | 48,8 | 48 | 48,6 |

Comme illustré dans le tableau 4, ainsi que dans la figure 2A, l'utilisation de condensat de désodorisation d'huile végétale permet d'obtenir du PLA additivé dont l'élongation à la rupture est au moins égale à 20 % (voir tableau 1) et dont la température de transition vitreuse (Tg) est supérieure à 48 °C. Ces valeurs sont compatibles avec une utilisation en tant qu'emballage alimentaire, notamment en tant que sac plastique et permettent notamment d'éviter le ramollissement des emballages réalisés à partir de PLA additivé selon l'invention, aux températures normales d'utilisation (classiquement inférieure à 40 °C).

Lors de l'additivation du PLA avec un condensat de tournesol, dans une proportion massique de 10 %, une valeur de température de transition vitreuse Tg similaire à celle des condensat de palme, olive, colza ou soja est obtenue. Cette valeur varie entre 48 et 52 °C selon le lot de condensat utilisé.

En revanche, comme illustré dans la figure 2A, le PLA additivé avec des additifs plastifiants de l'art antérieur présente une température de transition vitreuse inférieure à 40 °C, pour des proportions d'additifs de 5, 10 ou 15 %. Ainsi le PLA additivé avec une proportion massique de 15 % d'ATBC, plastifiant biodégradable et non toxique, a une Tg inférieure à 25 °C. Le PLA additivé de DOA, un plastifiant classique à base d'adipate, dans des proportions de 5, 10 ou 15 % a une Tg inférieure à 40 °C. Enfin le PLA additivé de PEG 400 dans une proportion massique de 15 %, a une Tg inférieure à 20 °C. Ces résultats sont similaires quelle que soit l'huile végétale à partir de laquelle est obtenu le condensat de désodorisation d'huile végétale (Fig.3D)

La stabilité des granulés de PLA additivés de condensats de désodorisation d'huile de palme ou d'olive, illustrée par la température de transition vitreuse, a été comparée à 20 jours et 170 ou 290 jours, comme illustré dans les figures 2B et 2C.

Les résultats montrent que la température de transition vitreuse n'est pas modifiée au cours de cette période, et ce quelles que soient l'huile végétale (palme ou olive) et la proportion massique de condensat de désodorisation d'huile végétale ajoutée au PLA (de 5 à 15 %).

Enfin, les résultats des tests de migration globale effectués sur les films de PLA additivés de 5 à 10 % massique de condensats de désodorisation d'huile de palme montrent que la concentration totale de composés formant lesdits condensats dans les milieux simulateurs d'aliments est inférieure au seuil de migration réglementaire, soit à 60 mg/kg d'aliment simulateur. De tels résultats prédisent une stabilité du film réalisé en PLA additivé selon l'invention au contact alimentaire pendant un an, à température ambiante.

En outre, la réglementation en matière d'emballage alimentaire impose une non-altération des propriétés olfactives et organoleptiques de l'aliment au contact. Un test de Robinson, mené sur un panel de personnes sur les films de PLA additivés de 5 et 10 % massique en condensat de désodorisation d'huile de palme n'a mis en évidence aucune altération du goût ou de l'odeur.

L'ensemble de ces résultats montre que le PLA additivé avec un condensat de désodorisation présente globalement des propriétés mécaniques et une température de transition vitreuse supérieure au PLA mélangé à des additifs connus de l'art antérieur. L'ensemble de ces qualités permet d'obtenir un matériau plastique biosourcé et biodégradable utilisable en tant qu'emballage, notamment alimentaire.

### 3) Effet synergique d'un condensat de désodorisation sur l'amélioration de la ductilité du PLA

La comparaison de différentes compositions d'acides gras libres montre également qu'un condensat de désodorisation d'huile végétale induit un effet supérieur sur l'augmentation de la ductilité du polymère par rapport au simple mélange des acides gras le composant. Ces résultats (voir tableau 4 ci-dessous et figure 4 A-C) suggèrent fortement un effet synergique des différents composés du condensat vis à vis du mélange d'acides gras libres.

Aux fins de cette comparaison, 7 compositions ont été préparées. Pour les compositions 2 à 7, 10 % en poids d'additif ont été ajouté, par rapport au poids total de la composition, ont été ajoutés à du PLA4060D. La composition 1 correspond au PLA4060D sans additif.
- composition 1 : PLA4060D
- composition 2 : PLA4060D + 10% acide palmitique (100 %)
- composition 3 : PLA4060D + 10 % acide oléique (100 %)
- composition 4 : PLA4060D + 10 % Huile de palme hydrogénée [10 % de diglycérides (DG) + 90 % triglycérides (TG) comme estimé selon le procédé décrit dans la norme NFEN 14105]
- composition 5 : PLA4060D + 10 % [50 % wt acide palmitique + 50 % wt acide oléique]
- composition 6 : PLA4060D + 10 % [95 % wt mélange d'acides gras libres (50 % wt acide palmitique + 50 % wt Acide oléique) + 5 % wt huile de palme hydrogénée (10 % DG + 90 % TG]
- composition 7 : PLA4060D + 10 % Condensat de désodorisation d'huile de palme [95,4 % d'acides gras libres (dont 49,8 % acide palmitique + 35 % acide oléique + 7,7 % acide linoléique + 4,1 % acide stéarique + 1,3 % Acide myristique + autres) et 4,6 % de glycérides (dont 1,7 % monoglycérides (MG) + 2,2 % DG + 0,7% triglycérides TG)].

**Tableau 5 :**

| **COMPOSITION** | **1** | **2** | **3** | **4** | **5** | **6** | **7** |
|---|---|---|---|---|---|---|---|
| **Elongation à la rupture (%)** | 5 | 4 | 16 | 9 | 45 | 74 | 132 |
| **Module d'Young (MPa)** | 1709 | 1722 | 1440 | 1540 | 1593 | 1549 | 1458 |
| **Température de transition vitreuse (°C)** | 55,7 | 49,0 | 44,6 | 48,6 | 45,9 | 44,6 | 44,9 |

Les propriétés mécaniques ont été mesurées selon les méthodes et normes définies précédemment. La température de transition vitreuse a été mesurée par DSC (Differential Scanning Calorimetry) non modulée, avec une vitesse de chauffage de 10 °C/min.

Les résultats montrent que pour cet exemple, l'ajout dans la composition d'un mélange constitué d'un acide gras libre saturé (acide palmitique) et d'un acide gras libre insaturé (acide oléique) permet d'obtenir une augmentation d'un facteur 10 de l'élongation à la rupture. Un tel mélange représente environ 80% de la composition d'un condensat de désodorisation d'huile de palme. Plus le mélange utilisé se rapproche de la composition finale du condensat d'huile de palme, plus l'augmentation de l'élongation à la rupture observée est importante. Ainsi le PLA additivé avec la composition 6, qui présente environ 85 % de similarité de composition avec le condensat de désodorisation d'huile de palme, présente une augmentation de l'élongation à la rupture de plus de 10 fois par rapport au PLA témoin (composition 1). L'utilisation du condensat de désodorisation d'huile de palme permet d'obtenir le meilleur résultat, soit une élongation à la rupture pour le PLA de l'ordre de 130 % soit une augmentation quasiment d'un facteur 25. Ces résultats démontrent la supériorité du condensat de désodorisation naturel de composition complexe concernant l'amélioration de la ductilité, comparé à l'utilisation de manière isolée d'un type de molécules présentes dans le produit naturel. L'effet cocktail / synergique entre les différentes molécules organiques naturellement présentes apparaît être un facteur déterminant.

La composition de l'additif (composition 2 à 7) ne modifie pas significativement la température de transition vitreuse et le module d'Young.

### 4) Variabilité des lots de condensat de palme sur les propriétés mécaniques et thermiques du PLA

La composition d'un condensat de désodorisation d'une huile donnée est susceptible de varier selon les lots. Comme illustré ci-dessous, la variabilité entre les différents lots ne modifie pas les résultats obtenus quand aux propriétés mécaniques et termiques du polymère additivé obtenu.
CP1 = Condensat de Palme du 1er lot (E 12-1822)
CP2 = Condensat de Palme du 2e lot (E 14-5299)
CP3 = Condensat de Palme du 3e lot (E 14-5903)

Composition du condensat de désodorisation de palme lot E12-1822

| **Analyse** | **Résultats** | | **Unité** | **Méthode** |
|---|---|---|---|---|
| **Indice d'acide** | **201** | | mg KOH/g | NF EN ISO 660 |
| **Indice de saponification** | **205,7** | | mg KOH/g | NF EN ISO 3657 |
| **Teneur en acides gras** | **100** | | g/100g produit | NF EN ISO 12966-2 |
| **Composition glycéridique** | Acides gras libres | **95,3** | % | IUPAC 6.002 et NF EN 14105 |
| | Mono glycérides | **1,7** | % | |
| | Cholestérol | **0** | % | |
| | Stérols | **0** | % | |
| | Di glycérides | **2,2** | % | |
| | Tri glycérides | **0,7** | % | |
| | Esters d'acides gras | **0** | % | |
| | Non identifiés | **0** | % | |

Composition en acides gras (NF EN ISO 12966-2) lot E12-1822

| **ACIDES GRAS** | **Nom used** | **%** |
|---|---|---|
| C8 : 0 | Acide Caprylique | **<0,1** |
| C10 : 0 | Acide Caprique | **<0,1** |
| C12 : 0 | Acide Laurique | **0,4** |
| C14 : 0 | Acide Myristique | **1,3** |
| C16 : 0 | Acide Palmitique | **49,8** |
| C16 : 1 | Acide Palmitoléique | **0,2** |
| C17:1 | | **<0,1** |
| C18 : 0 | Acide Stéarique | **4,1** |
| C18 : 1 trans | | **0,2** |
| C18 : 1 cis | Acide Oléique | **35** |
| C18 :2 trans | | **0,1** |
| C18 : 2 cis | Acide Linoléique | **7,7** |
| C18 : 3 trans_ | | **<0,1** |
| C18 : 3 cis | Acide Linolénique | **0,3** |
| C20 : 0 | Acide Arachidique | **0,3** |
| C20 : 1 | Acide Eicosénoïque | **0,1** |
| C22 : 0 | Acide Béhénique | **0,1** |
| C24 : 0 | Acide Lignocérique | **<0,1** |
| Non identifié | | **0,7** |

Composition condensat de désodorisation huile de palmeE14-5299

| **Analyse** | **Réésultats** | | **Unité** | **Méthode** |
|---|---|---|---|---|
| **Indice d'acide** | **187,8** | | mg KOH/g | NF EN ISO 660 |
| **Indice de saponification** | **202** | | mg KOH/g | NF EN ISO 3657 |
| **Teneur en acides gras** | **100** | | g/100g produit | NF EN ISO 12966-2 |
| **Composition glycéridique** | Acides gras libres | **96** | % | IUPAC 6.002 et NF EN 14105 |
| | Mono glycérides | **1,3** | % | |
| | Cholestérol | **0** | % | |
| | Stérols | **0,9** | % | |
| | Di glycérides | **2** | % | |
| | Tri glycérides | **0,4** | % | |
| | Esters d'acides gras | **0** | % | |
| | Non identifiés | **0,3** | % | |

Composition en acides gras (NF EN ISO 12966-2)

| **ACIDES GRAS** | **Nom usuel** | **%** |
|---|---|---|
| C8 : 0 | Acide Caprylique | **<0,1** |
| C10 : 0 | Acide Caprique | **<0,1** |
| C12 : 0 | Acide Laurique | **0,2** |
| C14 : 0 | Acide Myristique | **1,1** |
| C16 : 0 | Acide Palmitique | **46,4** |
| C16 : 1 | Acide Palmitoléique | **0,2** |
| C17:1 | | **<0,1** |
| C18 : 0 | Acide Stéarique | **4,3** |
| C18 : 1 trans | | **0,1** |
| C18 : 1 cis | Acide Oléique | **37,6** |
| C18 :2 trans | | **0,1** |
| C18 : 2 cis | Acide Linoléique | **8,9** |
| C18 : 3 trans_ | | **<0,1** |
| C18 : 3 cis | Acide Linolénique | **0,4** |
| C20 : 0 | Acide Arachidique | **0,3** |
| C20 : 1 | Acide Eicosénoïque | **0,1** |
| C22 : 0 | Acide Béhénique | **0,1** |
| C24 : 0 | Acide Lignocérique | **<0,1** |
| Non identifié | | **<0,1** |

Composition condensat de désodorisation huile de palme E14-5903

| **Analyse** | **Résultats** | | **Unité** | **Méthode** |
|---|---|---|---|---|
| **Indice d'acide** | **181,9** | | mg KOH/g | NF EN ISO 660 |
| **Indice de saponification** | **206** | | mg KOH/g | NF EN ISO 3657 |
| **Teneur en acides gras** | **99,8** | | g/100g produit | NF EN ISO 12966-2 |
| **Composition glycéridique** | Acides gras libres | **93,3** | % | IUPAC 6.002 et NF EN 14105 |
| | Mono glycérides | **3,0** | % | |
| | Cholestérol | **0** | % | |
| | Stérols | **0** | % | |
| | Di glycérides | **3,2** | % | |
| | Tri glycérides | **0,4** | % | |
| | Esters d'acides gras | **0** | % | |
| | Non identifiés | **0,1** | % | |

Composition en acides gras (NF EN ISO 12966-2)

| **ACIDES GRAS** | **Nom usuel** | **%** |
|---|---|---|
| C8 : 0 | Acide Caprylique | **0,1** |
| C10 : 0 | Acide Caprique | **0,1** |
| C12 : 0 | Acide Laurique | **0,8** |
| C14 : 0 | Acide Myristique | **1,4** |
| C16 : 0 | Acide Palmitique | **50,6** |
| C16 : 1 | Acide Palmitoléique | **0,2** |
| C17:1 | | **<0,1** |
| C18 : 0 | Acide Stéarique | **4,1** |
| C18 : 1 trans | | **0,2** |
| C18 : 1 cis | Acide Oléique | **32,9** |
| C18 :2 trans | | **0,1** |
| C18 : 2 cis | Acide Linoléique | **8,5** |
| C18 : 3 trans_ | | **<0,1** |
| C18 : 3 cis | Acide Linolénique | **0,3** |
| C20 : 0 | Acide Arachidique | **0,3** |
| C20 : 1 | Acide Eicosénoïque | **0,1** |
| C22 : 0 | Acide Béhénique | **0,1** |
| C24 : 0 | Acide Lignocérique | **<0,1** |
| Non identifié | | **<0,1** |

### Conditions de mise en oeuvre et d'essai

- Mélanges réalisés avec extrudeuse bivis PTW 16-40D Thermo Haake®
- Les granulés sont ensuite thermocompressés pour obtenir des plaques. (Thermocompression sur presse Gibrite). Réalisation de plusieurs plaques thermocompressées et sur chaque plaque plusieurs éprouvettes de type 5A ont été découpées pour réaliser les tests de traction suivant la norme ISO 527-2⁽²⁾.
- Test de traction : Instron 4301 du PIMM, avec une cellule de traction de 5kN du CNAM.

La vitesse de traction pour tous les essais est de **5mm/min**

### Résultats :

Les résultats des propriétés mécaniques des PLA additivés avec les trois lots de condensats de palme figurent dans le Tableau 6 ci-dessous.
Pour les deux mélanges CP2 et CP3, les éprouvettes de traction ont été découpées dans trois plaques réalisées avec les mêmes paramètres de thermocompression.

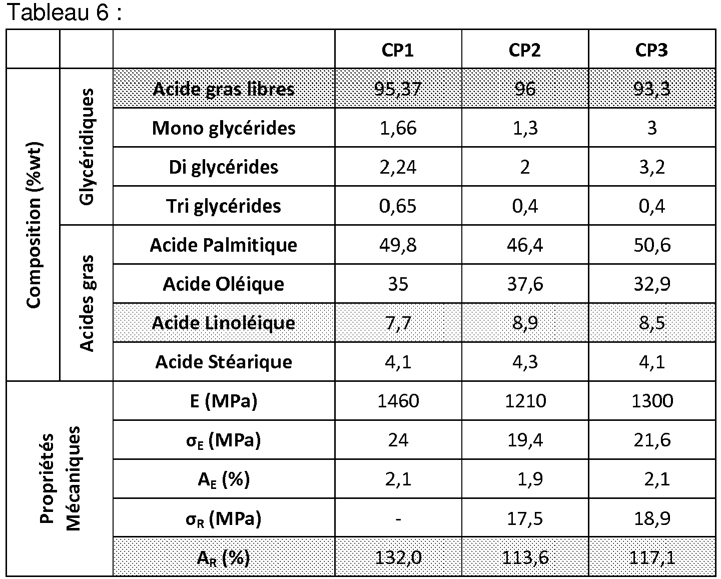

### 5) Propriétés thermiques du PLA : variabilité des lots de condensat de palme

Les caractéristiques des mélanges ont été déterminées à l'aide de la DSC TA Q1000®. La méthode utilisée pour tous les échantillons fut la suivante :
- Une première chauffe à 10°C/min jusqu'à 120°C
- Une isotherme à 120°C pendant 2 minutes
- Un refroidissement à 10°C/min jusqu'à -50°C
- Une isotherme à -50°C pendant 2 minutes
- Une deuxième chauffe à 10°C/min jusqu'à 120°C

**Tableau 7 : Propriétés thermiques (transition vitreuse Tg) du PLA en présence des différents lots de condensats de désodorisation de palme.**

| **PLA/additif** | **Tg (°C)** |
|---|---|
| PLA4060D + 10%wt CP1* | 49,4 |
| PLA4060D + 10%wt CP2 | 38,3 |
| PLA4060D + 10%wt CP3 | 40,1 |

Le tableau 7 montre que la variabilité de la composition des lots de condensats de palme n'affecte pas la valeur de la température de transition vitreuse du PLA additivé. Cette température est faiblement abaissée par l'ajout de condensat de désodorisation d'huile végétale et ainsi reste au-dessus de la température ambiante.

### 6) Matériau polymère : mélange PLA4060D 90%+ PHBV 10% Conditions de mise en oeuvre et d'essais

- Les mélanges de PLA4060D avec 10% CP1 puis avec le PHBV 10%, ont été obtenus en extrudeuse bi-vis ou en mélange en dry blend puis les films ont été produits par extrusion cast ou par extrusion soufflage de gaine avec extrudeuse MAPRE 30-33D.
- Sur les films produits, des éprouvettes de traction ont été découpées à l'aide d'un poinçon. Il s'agit d'éprouvettes normalisées de type 5A suivant la norme ISO 527-2⁽²⁾.
- Test de traction : Instron 4507, avec une cellule de traction de 5kN du CNAM. La vitesse de traction pour tous les essais est de **5mm/min**

### Résultats

**Tableau 8 : Propriétés mécaniques des films de mélanges PLA+10% PHBV additivé avec 10% de condensat de désodorisation d'huile de palme (CP1) produits par extrusion cast et extrusion soufflage de gaine**

| | **E (MPa)** | **A_{R} (%)** |
|---|---|---|
| PLA 4060D + 10%PHBV Extrusion cast | 1640 | 16 |
| PLA 4060D + 10%CP1 Extrusion soufflage gaine | 2226 | 87 |
| (90 PLA4060+10 CP1) + PHBV Dry blend+Extrusion cast | 2032 | 112 |
| (90 PLA4060+10 CP1) + PHBV Dry blend+Extrusion soufflage gaine | 1410 | 132 |
| (90 PLA4060+10 CP1) + PHBV Bi-vis+Extrusion cast | 1086 | 78 |
| (90 PLA4060+10 CP1) + PHBV Bi vis + Extrusion soufflage gaine | 2560 | 128 |

Le PLA4060D vierge peut être mis en forme par extrusion cast mais ne peut être mis en forme par extrusion soufflage de gaine du fait de sa faible étirabilité à l'état fondu. En effet, les valeurs d'A_{R} pour un PLA vierge varient entre 5 et 9% pour un film obtenu en extrusion cast ou par thermocompression

Les résultats du Tableau 8 confirment l'amélioration des propriétés de déformation à la rupture pour un film de PLA +10% CP produit soit par extrusion soufflage de gaine soit par extrusion cast. Les valeurs d'A_{R} (allongement à la rupture) varient entre 87% et 141%,

Ainsi seule l'addition du condensat d'huile végétale (ici le CP) dans le PLA, par son effet sur l'augmentation de la ductilité (allongement à la rupture augmentée), permet la mise en forme par extrusion soufflage de gaine. Par extrusion soufflage de gaine, les films issus du mélange de (PLA+10% CP1) et de PHBV montrent des allongements à la rupture variant entre 128 et 144%. On constate donc un effet du condensat sur les propriétés mécaniques, à température ambiante, mais également à l'état fondu

### 7) Incorporation du condensat de palme dans un polyester autre que PLA PHB et PHBV

Deux polyesters biosourcés et biodégradables de la famille des PHAs ont été testés pour l'incorporation du condensat d'huile de palme. Il s'agit du PHB : Poly (3-hydroxybutyrate) et du PHBV : Poly (3-hydroxybutyrate-co Hydroxyvalérate)
Conditions de mise en forme et d'essais :
- Mélanges réalisés avec mélangeur interne Haake avec 10% condensat de palme CP1
- Les granulés sont ensuite thermocompressés pour obtenir des plaques. (Thermocompression Gibrite du PIMM). Une plaque thermocompressée a été fabriquée sur chaque mélange et plusieurs éprouvettes de type 5A ont été découpées sur la plaque pour réaliser les tests de traction.
- Test de traction : Instron 4507 du CNAM, avec une cellule de traction de 5kN du CNAM. La vitesse de traction pour tous les essais est de **5mm/min**

### Résultats

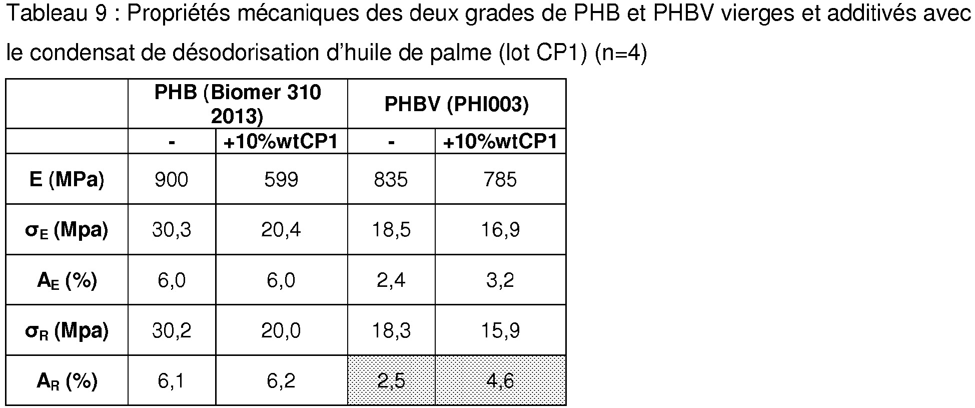

Le PHA de grade PHI003 (PHBV) montre un très faible abaissement du module d'Young et une augmentation de l'allongement à la rupture de 86% (augmentation d'au moins un facteur 1,5).

Le PHB montre au contraire un maintien de l'allongement à la rupture et une diminution significative du module d'Young d'au moins 30 %. Une telle modification des propriétés du polymère additivé permet d'obtenir un matériau plus souple dont la processabilité est améliorée.

### Polyamide

### Conditions de mise en oeuvre et essais :

Un mélange PA11 et de 10 % de condensat de palme (CP1) a été fabriqué par mélangeur interne. Les granulés ont ensuite été thermocompressés, et des éprouvettes ont été découpées à partir de ces plaques. Les tests de traction ont été menés sur Instron 4507 du Cnam avec une cellule de traction de 5KN. La vitesse de traction est de 5mm/min

### Résultats :

**Tableau 10 : propriétés mécaniques et température de transition vitreuse (Tg) du PA 11 en présence d'un condensat de désodorisation d'huile de palme**

| | **PA11** | **(PA11+10%wtCP1)** |
|---|---|---|
| **E (MPa)** | 652 | 297 |
| **σ_{E} (MPa)** | 34,9 | 34,3 |
| **A_{E} (%)** | 8,9 | 74,6 |
| **σ_{R} (MPa)** | 40,7 | 40,8 |
| **A_{R} (%)** | 280 | 302 |
| **Tg (°C)** | 50 | 30 |

Une augmentation de 8% du facteur A_{R} (allongement à la rupture) du PA11 additivé est mesurée vis-à-vis du PA11 vierge (non additivé). La transition vitreuse du PA11 est abaissée à 30 °C avec 10% de condensat de palme. Les résultats sur le PLA11 montrent également que le module d'Young (E) diminue de moitié, et que les 2 contraintes **σ_{E}** (contrainte à l'écoulement) et **σ_{R}** (contrainte à la rupture) ne varient pas. Enfin une augmentation très significative, d'un facteur 8, de l'allongement à l'écoulement (**A_{E}**) est mesurée. Ceci montre que le condensat de désodorisation d'huile de palme permet d'augmenter significativement la déformation à l'écoulement du PA11, sans diminution de la contrainte à l'écoulement..Une telle modification permet d'obtenir un matériau beaucoup plus élastique permettant d'envisager des applications dans les domaines habituellement couverts par les élastomères et caoutchoucs, qui sont généralement pénalisés par leurs faibles températures de transition vitreuse alors que dans le cas du PA11 additivé, la transition vitreuse est au-delà de la température ambiante.

### REFERENCES

1. F. Ali, Y.-W. Chang, S. C. Kang and J. Y. Yoon, Polymer Bulletin, 2009, 62, 91-98.
2. Y. Q. Xu and J. P. Qu, Journal of Applied Polymer Science, 2009, 112, 3185-3191.
3. Z. Xiong, Y. Yang, J. Feng, X. Zhang, C. Zhang, Z. Tang and J. Zhu, Carbohydr. Polym., 2012, 92, 810-816.
4. V. S. G. Silverajah, N. A. Ibrahim, N. Zainuddin, W. Yunus and H. Abu Hassan, Molecules, 2012, 17, 11729-11747.
5. V. S. G. Silverajah, N. A. Ibrahim, W. Yunus, H. Abu Hassan and C. B. Woei, Int. J. Mol. Sci., 2012, 13, 5878-5898.
6. E. A. J. Al-Mulla, W. Yunus, N. A. B. Ibrahim and M. Z. Ab Rahman, Journal of Materials Science, 2010, 45, 1942-1946.

## Revendications

1. Utilisation d'une composition comprenant au moins un acide gras libre saturé et au moins un acide gras libre insaturé en tant qu'additif, pour modifier les propriétés mécaniques d'un matériau polymère thermoplastique choisi parmi un polyamide ou un polyester, lesquels acides gras sont des acides gras naturels présentant une chaîne carbonée ayant de 4 à 36 atomes de carbone.

2. Utilisation selon la revendication 1, **caractérisée en ce que** le polyester est un polyester de la famille des polyéthylènes téréphtalates ou un polyester biodégradable.

3. Utilisation selon l'une des revendications précédentes, **caractérisée en ce que** le matériau polymère thermoplastique est l'acide polylactique, le polylactide ou l'un de leurs copolymères.

4. Utilisation selon l'une des revendications précédentes, **caractérisée en ce que** la composition comprenant au moins un acide gras libre saturé et au moins un acide gras libre insaturé est comprise dans au moins un condensat de désodorisation d'huile végétale.

5. Utilisation selon la revendication 4, **caractérisée en ce que** le matériau polymère thermoplastique est additivé avec une proportion massique de condensat de désodorisation d'huile végétale allant de 1 à 30 %, préférentiellement de 5 à 15 %, en poids par rapport au poids total du matériau polymère thermoplastique additivé par ledit au moins un condensat de désodorisation d'huile végétale.

6. Utilisation selon l'une des revendications 4 ou 5, **caractérisée en ce que** l'huile végétale est choisie parmi l'huile de soja, l'huile d'olive, l'huile de palme, l'huile de colza, l'huile d'arachide, l'huile d'amande, l'huile de tournesol, l'huile de tournesol oléique, l'huile de palmiste, l'huile de pépins de raisin, l'huile de pépin de courge, l'huile de maïs, l'huile de noix, l'huile de germe de blé, l'huile de bourrache, l'huile de noisette, l'huile de cameline, l'huile de chanvre, l'huile de macadamia, l'huile d'onagre.

7. Utilisation selon l'une des revendications 4 à 6, **caractérisée en ce que** ledit au moins un condensat de désodorisation d'huile végétale est obtenu lors de l'étape de désodorisation d'un procédé de raffinage physique ou chimique d'une huile végétale, par distillation d'acides gras, ladite huile végétale étant agitée avec une quantité de vapeur injectée allant de 7,5 à 8.5 kg/h, à une température allant de 180 à 260 °C, et sous une pression absolue inférieure à 5 mBar.

8. Utilisation selon la revendication 7, **caractérisée en ce que** ledit au moins un condensat de désodorisation d'huile végétale est obtenu par raffinage physique à une température allant de 240 à 260 °C.

9. Utilisation selon l'une des revendications 4 à 8, **caractérisée en ce que** ledit au moins un condensat de désodorisation d'huile végétale comprend une proportion massique d'acides gras libres par rapport au poids total du condensat de désodorisation d'huile végétale allant de 15 à 100 %.

10. Matériau polymère thermoplastique additivé comprenant au moins un polymère thermoplastique choisi parmi les polyamides ou les polyesters de la famille du polyéthylène téréphtalate et les polyesters biodégradables, **caractérisé en ce qu'**il est additivé par au moins un condensat de désodorisation d'huile végétale.

11. Matériau polymère thermoplastique additivé selon la revendication 10, **caractérisé en ce que** le polymère thermoplastique est un matériau biodégradable consistant en l'acide polylactique, le polylactide et/ou un de leurs copolymères.

12. Matériau polymère thermoplastique additivé selon la revendication 11, **caractérisé en ce que** la proportion massique du condensat de désodorisation d'huile végétale par rapport au poids total du matériau thermoplastique additivé va de 5 à 30 %, ledit matériau présentant les propriétés mécaniques, mesurées en traction uniaxiale selon la norme ISO 527-2, suivantes : une élongation à la rupture allant de 30 à 300 %, un module d'Young supérieur à 1200 MPa, une contrainte à l'écoulement supérieure à 15 MPa, ledit matériau présentant en outre une température de transition vitreuse, mesurée par TMDSC (temperature modulated differential scanning calorimetry) allant de 45 à 55 °C à la pression atmosphérique.

13. Emballage alimentaire réalisé dans un matériau polymère thermoplastique additivé selon l'une des revendications 10 à 12.

14. Procédé de fabrication d'un matériau polymère thermoplastique additivé selon l'une des revendications 10 à 12, **caractérisé en ce qu'**il comprend une étape d'additivation d'au moins un matériau polymère thermoplastique avec au moins un condensat de désodorisation d'huile végétale.

## Patentansprüche

1. Verwendung einer Zusammensetzung, die mindestens eine gesättigte freie Fettsäure und mindestens eine ungesättigte freie Fettsäure umfasst, als Zusatzstoff zur Modifizierung der mechanischen Eigenschaften eines thermoplastischen Polymerwerkstoffs, der aus einem Polyamid oder einem Polyester ausgewählt ist, wobei die Fettsäuren natürliche Fettsäuren mit einer Kohlenstoffkette sind, die 4 bis 36 Kohlenstoffatome aufweist.

2. Verwendung nach Anspruch 1, **dadurch gekennzeichnet, dass** der Polyester ein Polyester aus der Polyethylenterephthalat-Familie oder ein biologisch abbaubarer Polyester ist.

3. Verwendung nach einem der vorhergehenden Ansprüche, **dadurch gekennzeichnet, dass** der thermoplastische Polymerwerkstoff Polymilchsäure, Polylactid oder eins ihrer Copolymere ist.

4. Verwendung nach einem der vorhergehenden Ansprüche, **dadurch gekennzeichnet, dass** die Zusammensetzung, die mindestens eine gesättigte freie Fettsäure und mindestens eine ungesättigte freie Fettsäure umfasst, in mindestens einem Pflanzenöl-Desodorierungskondensat enthalten ist.

5. Verwendung nach Anspruch 4, **dadurch gekennzeichnet, dass** der thermoplastische Polymerwerkstoff mit einem Massenverhältnis des Pflanzenöl-Desodorierungskondensats zwischen 1 und 30 Gewichts-%, vorzugsweise zwischen 5 und 15 Gewichts-%, bezogen auf das Gesamtgewicht des thermoplastischen Polymerwerkstoffs additiviert ist, der mit dem mindestens einen Pflanzenöl-Desodorierungskondensat additiviert ist.

6. Verwendung nach Anspruch 4 oder 5, **dadurch gekennzeichnet, dass** das Pflanzenöl ausgewählt ist aus Sojaöl, Olivenöl, Palmöl, Rapsöl, Erdnussöl, Mandelöl, Sonnenblumenöl, Öl von Sonnenblumen mit hohem Ölsäuregehalt, Palmkernöl, Traubenkernöl, Kürbiskernöl, Maisöl, Walnussöl, Weizenkeimöl, Borretschöl, Haselnussöl, Leindotteröl, Hanföl, Macadamianussöl, Nachtkerzenöl.

7. Verwendung nach einem der Ansprüche 4 bis 6, **dadurch gekennzeichnet, dass** das mindestens eine Pflanzenöl-Desodorierungskondensat im Desodorierungsschritt eines physikalischen oder chemischen Raffinationsverfahrens eines Pflanzenöls durch Destillation von Fettsäuren erhalten wird, wobei das Pflanzenöl mit einer zwischen 7,5 und 8,5 kg/h eingeblasenen Dampfmenge bei einer Temperatur zwischen 180 und 260 °C und unter einem Absolutdruck unter 5 mBar bewegt wird.

8. Verwendung nach Anspruch 7, **dadurch gekennzeichnet, dass** das mindestens eine Pflanzenöl-Desodorierungskondensat durch physikalische Raffination bei einer Temperatur zwischen 240 und 260 °C erhalten wird.

9. Verwendung nach einem der Ansprüche 4 bis 8, **dadurch gekennzeichnet, dass** das mindestens eine Pflanzenöl-Desodorierungskondensat ein Massenverhältnis an freien Fettsäuren bezogen auf das Gesamtgewicht des Pflanzenöl-Desodorierungskondensats zwischen 15 und 100 % umfasst.

10. Additivierter thermoplastischer Polymerwerkstoff, der mindestens ein thermoplastisches Polymer umfasst, das aus Polyamiden oder Polyestern der Polyethylenterephthalat-Familie und biologisch abbaubaren Polyestern ausgewählt ist, **dadurch gekennzeichnet, dass** er mit mindestens einem Pflanzenöl-Desodorierungskondensat additiviert ist.

11. Additivierter thermoplastischer Polymerwerkstoff nach Anspruch 10, **dadurch gekennzeichnet, dass** das thermoplastische Polymer ein biologisch abbaubarer Werkstoff ist, der aus Polymilchsäure, Polylactid und/oder einem ihrer Copolymere besteht.

12. Additivierter thermoplastischer Polymerwerkstoff nach Anspruch 11, **dadurch gekennzeichnet, dass** das Massenverhältnis des Pflanzenöl-Desodorierungskondensats bezogen auf das Gesamtgewicht des additivierten thermoplastischen Polymerwerkstoffs zwischen 5 und 30 % beträgt, wobei der Werkstoff folgende mechanische Eigenschaften, gemessen bei einachsiger Zugbelastung gemäß ISO-Norm 527-2, aufweist: Bruchdehnung zwischen 30 und 300 %, Elastizitätsmodul über 1200 MPa, Streckgrenze über 15 MPa, wobei der Werkstoff ferner eine Glasübergangstemperatur, gemessen per TMDSC (temperaturmodulierte dynamische Differenzkalorimetrie), zwischen 45 und 55 °C bei Atmosphärendruck aufweist.

13. Lebensmittelverpackung, die aus einem additivierten thermoplastischen Polymerwerkstoff nach einem der Ansprüche 10 bis 12 gefertigt ist.

14. Verfahren zur Herstellung eines additivierten thermoplastischen Polymerwerkstoffs nach einem der Ansprüche 10 bis 12, **dadurch gekennzeichnet, dass** es einen Schritt zur Additivierung von mindestens einem thermoplastischen Polymerwerkstoff mit mindestens einem Pflanzenöl-Desodorierungskondensat umfasst.

## Claims

1. Use of a composition comprising at least one saturated free fatty acid and at least one unsaturated free fatty acid as an additive, in order to modify the mechanical properties of a thermoplastic polymer material chosen from a polyamide or a polyester wherein said fatty acids are natural fatty acids having a carbon chain having from 4 to 36 carbon atoms.

2. Use according to claim 1, **characterized in that** the polyester is a polyester from the family of polyethylene terephthalates or a biodegradable polyester.

3. Use according to one of the preceding claims, **characterized in that** the thermoplastic polymer material is polylactic acid, polylactide or one of the copolymers thereof.

4. Use according to one of the preceding claims, **characterized in that** the composition comprising at least one saturated free fatty acid and at least one unsaturated free fatty acid is comprised in at least one vegetable oil deodorization condensate.

5. Use according to claim 4, **characterized in that** the thermoplastic polymer material is additivated with a mass proportion of vegetable oil deodorization condensate ranging from 1 to 30%, preferentially from 5 to 15%, by weight with respect to the total weight of the additivated thermoplastic polymer material by said at least one vegetable oil deodorization condensate.

6. Use according to one of claims 4 or 5, **characterized in that** the vegetable oil is chosen from soy oil, olive oil, palm oil, rapeseed oil, peanut oil, almond oil, sunflower oil, oleic sunflower oil, palm kernel oil, grape seed oil, pumpkin seed oil, corn oil, walnut oil, wheat germ oil, borage oil, hazelnut oil, cameline oil, hemp oil, macadamia oil, primrose oil.

7. Use according to one of claims 4 to 6, **characterized in that** said at least one vegetable oil deodorization condensate is obtained during the step of deodorization of a method of physical or chemical refining of a vegetable oil, by distillation of fatty acids, with said vegetable oil being agitated with a quantity of injected steam ranging from 7.5 to 8.5 kg/h, at a temperature ranging from 180 to 260 °C, and under an absolute pressure less than 5 mBar.

8. Use according to claim 7, **characterized in that** said at least one vegetable oil deodorization condensate is obtained by physical refining at a temperature ranging from 240 to 260 °C.

9. Use according to one of claims 4 to 8, **characterized in that** said at least one vegetable oil deodorization condensate comprises a mass proportion of free fatty acids with respect to the total weight of the vegetable oil deodorization condensate ranging from 15 to 100%.

10. Additivated thermoplastic polymer material comprising at least one thermoplastic polymer chosen from polyamides or polyesters from the polyethylene terephthalate family and biodegradable polyesters, **characterized in that** it is additivated by at least one vegetable oil deodorization condensate.

11. Additivated thermoplastic polymer material according to claim 10, **characterized in that** the thermoplastic polymer is a biodegradable material consisting of polylactic acid, polylactide and/or one of the copolymers thereof.

12. Additivated thermoplastic polymer material according to claim 11, **characterized in that** the mass proportion of the vegetable oil deodorization condensate with respect to the total weight of the additivated thermoplastic material ranges from 5 to 30%, with said material having the following mechanical properties, measured in uniaxial traction according to the standard ISO 527-2: a breaking elongation ranging from 30 to 300%, a Young's modulus greater than 1200 MPa, a yield stress greater than 15 MPa, said material further having a glass transition temperature, measured by TMDSC (temperature modulated differential scanning calorimetry) ranging from 45 to 55 °C at atmospheric pressure.

13. Food packaging carried out in an additivated thermoplastic polymer material according to one of claims 10 to 12.

14. Method for manufacturing an additivated thermoplastic polymer material according to one of claims 10 to 12, **characterized in that** it comprises a step of additivation of at least one thermoplastic polymer material with at least one vegetable oil deodorization condensate.
